# EUROPEAN PATENT APPLICATION

(11) **EP 4 814 871 A1**
(43) Date of publication of application: **30.09.2026**
(21) Application number: 26166975.8
(22) Date of filing: 24.03.2026
(51) Int. Cl.: G06T 9/40, G06T 9/00, G06T 17/00, H04N 19/124, H04N 19/157, H04N 19/597

(54) **CONDITIONAL QUANTIZATION OF TRISOUP VERTEX POSITIONS**

(30) Priority: 24.03.2025 US 202563776777 P
(71) Applicant: Comcast Cable Communications LLC, Philadelphia, Pennsylvania 19103 (US)
(72) Inventor: TAQUET, Jonathan, Philadelphia, 19103 (US); LASSERRE, Sébastien, Philadelphia, 19103 (US)
(74) Representative: V.O.

(57) **Abstract**

Quantization control may be used for coding data indicating a geometry of a point cloud. An edge coding mode associated with a TriSoup edge may be provided. The edge coding mode may be used to determine how position information of a vertex along the edge is quantized. Based on the edge coding mode, quantization precision may be selectively applied and/or adjusted. The position information may be quantized with a first precision with respect to a first coding mode and quantized with a second precision with respect to a second coding mode. By controlling quantization based on the edge coding mode, distortion and bitrate may be balanced to improve coding efficiency.

## Description

### CROSS-REFERENCE TO RELATED APPLICATIONS

This application claims the benefit of U.S. Provisional Application No. 63/776,777, filed on March 24, 2025. The above referenced application is hereby incorporated by reference in its entirety.

### BACKGROUND

An object or a scene may be described using volumetric visual data consisting of a series of points. The points may be stored in a point cloud format that includes a collection of points in three-dimensional space. As point clouds can get quite large in data size, transmitting and processing point cloud data may need a data compression scheme that is specifically designed with respect to the unique characteristics of point cloud data.

### SUMMARY

The following summary presents a simplified summary of certain features. The summary is not an extensive overview and is not intended to identify key or critical elements.

A geometry representation (e.g., a point cloud representation) of content may comprise a plurality of vertices arranged along edges (e.g., TriSoup edges). Positions of the vertices may be coded (e.g., encoded and/or decoded) in a bitstream. Coding of vertex positions may include quantization, for example, to reduce a bitrate associated with signaling the vertex positions. Quantization may comprise selecting a quantization precision (e.g., based on a geometry quality parameter) to balance bitrate reduction and distortion. An edge may be associated with an edge coding mode (e.g., a skip mode or a code mode). Based on the edge coding mode, quantization of a vertex position along the edge may be controlled. The vertex position along the edge may not be quantized or may be quantized with a maximum precision, for example, if the edge coding mode indicates that the edge is skipped. The vertex position may be quantized with a precision lower than the maximum precision, for example, if the edge coding mode indicates that the edge is coded. By controlling quantization based on the edge coding mode, overall coding efficiency may be improved.

These and other features and advantages are described in greater detail below.

### BRIEF DESCRIPTION OF THE DRAWINGS

Examples of several of the various embodiments of the present disclosure are described herein with reference to the drawings.
FIG. 1 shows an example point cloud coding system.
FIG. 2 shows an example Morton order.
FIG. 3 shows an example scanning order.
FIG. 4 shows an example neighborhood of cuboids for coding the occupancy of a child cuboid.
FIG. 5 shows an example of a dynamic reduction function that may be used in dynamic Optimal Binary Coders with Update on the Fly (OBUF).
FIG. 6 shows an example method for coding occupancy of a cuboid using dynamic OBUF.
FIG. 7 shows an example of an occupied cuboid.
FIG. 8A shows an example cuboid corresponding to a TriSoup node.
FIG. 8B shows an example refinement to the TriSoup model.
FIG. 8C shows an example of coding a centroid residual value.
FIG. 9A shows an example of voxelization.
FIG. 9B shows an example of voxelization.
FIGS. 10A-B show examples of a quantizer.
FIGS. 11A-B show examples of a quantizing process.
FIGS. 12A-C show examples of quantizing distances
FIGS. 13A-C show examples of dequantizing distances.
FIG. 14 shows an example of an encoding process.
FIG. 15 shows an example of a decoding process.
FIG. 16 shows an example of a geometry coding.
FIG. 17 shows an example of a skipped sub-volume.
FIGS. 18A-D show examples of coded TriSoup edges.
FIG. 18E shows an example of a process for quantizing a TriSoup vertex position.
FIG. 18F shows an example of a process for dequantizing a TriSoup vertex position.
FIG. 18G shows an example of a process for dequantizing a TriSoup vertex position.
FIG. 19 shows an example of a process for determining a TriSoup vertex position.
FIG. 20 shows an example of a process for determining a TriSoup vertex position
FIG. 21 shows an example method for dequantizing/quantizing a TriSoup vertex position.
FIG. 22 shows an example computer system in which examples of the present disclosure may be implemented
FIG. 23 shows example elements of a computing device that may be used to implement any of the various devices described herein.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of point cloud or point cloud sequence encoding or decoding systems. More particularly, the technology disclosed herein may relate to point cloud compression as used in encoding and/or decoding devices and/or systems.

At least some visual data may describe an object or scene in content and/or media using a series of points. Each point may comprise a position in two dimensions (x and y) and one or more optional attributes like color. Volumetric visual data may add another positional dimension to these visual data. For example, volumetric visual data may describe an object or scene in content and/or media using a series of points that each may comprise a position in three dimensions (x, y, and z) and one or more optional attributes like color, reflectance, time stamp, etc. Volumetric visual data may provide a more immersive way to experience visual data, for example, compared to the at least some visual data. For example, an object or scene described by volumetric visual data may be viewed from any (or multiple) angles, whereas the at least some visual data may generally only be viewed from the angle in which it was captured or rendered. As a format for the representation of visual data (e.g., volumetric visual data, three-dimensional video data, etc.) point clouds are versatile in their capability in representing all types of three-dimensional (3D) objects, scenes, and visual content. Point clouds are well suited for use in various applications including, among others: movie post-production, real-time 3D immersive media or telepresence, extended reality, free viewpoint video, geographical information systems, autonomous driving, 3D mapping, visualization, medicine, multi-view replay, and real-time Light Detection and Ranging (LiDAR) data acquisition.

As explained herein, volumetric visual data may be used in many applications, including extended reality (XR). XR encompasses various types of immersive technologies, including augmented reality (AR), virtual reality (VR), and mixed reality (MR). Sparse volumetric visual data may be used in the automotive industry for the representation of three-dimensional (3D) maps (e.g., cartography) or as input to assisted driving systems. In the case of assisted driving systems, volumetric visual data may be typically input to driving decision algorithms. Volumetric visual data may be used to store valuable objects in digital form. In applications for preserving cultural heritage, a goal may be to keep a representation of objects that may be threatened by natural disasters. For example, statues, vases, and temples may be entirely scanned and stored as volumetric visual data having several billions of samples. This use-case for volumetric visual data may be particularly relevant for valuable objects in locations where earthquakes, tsunamis and typhoons are frequent. Volumetric visual data may take the form of a volumetric frame. The volumetric frame may describe an object or scene captured at a particular time instance. Volumetric visual data may take the form of a sequence of volumetric frames (referred to as a volumetric sequence or volumetric video). The sequence of volumetric frames may describe an object or scene captured at multiple different time instances.

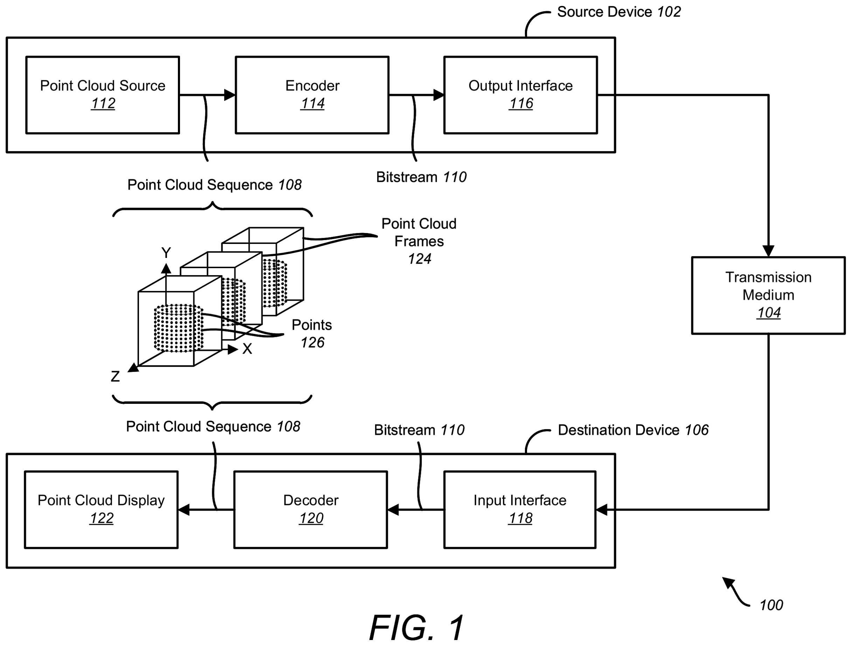

Volumetric visual data may be stored in various formats. A point cloud may comprise a collection of points in a 3D space. Such points may be used create a mesh comprising vertices and polygons, or other forms of visual content. As described herein, point cloud data may take the form of a point cloud frame, which describes an object or scene in content that is captured at a particular time instance. Point cloud data may take the form of a sequence of point cloud frames (e.g., point cloud video). As further described herein, point cloud data may be encoded by a source device (e.g., source device 102 as described herein with respect to FIG. 1) that outputs a bitstream containing the encoded point cloud data. The source device may encode the point cloud data based on point cloud compression coding, for example, geometry-based point cloud compression (G-PCC) coding and/or video-based point cloud compression (V-PCC) coding, or next generation coding. A destination device (e.g., destination device 106 as described herein with respect to FIG. 1) receives the bitstream containing the point cloud data and decodes the bitstream containing the point cloud data. The destination device may decode the point cloud data by performing point cloud decompression coding. The decompression coding may be an inverse process of the point cloud compression coding. The point cloud decompression coding may include, for example, G-PCC coding. Decoding may be used to decompress the point cloud data for display and/or other forms of consumption (e.g., further analysis, storage, etc.). The destination device (or a different device) may include, for example, a renderer for rendering the decoded point cloud data. The renderer may output content, for example, by rendering the point cloud data. The renderer may output content, for example, by rendering the point cloud data along with other data (e.g., audio data).

One format for storing volumetric visual data may be point clouds. A point cloud may comprise a collection of points in 3D space. Each point in a point cloud may comprise geometry information that may indicate the point's position in 3D space. For example, the geometry information may indicate the point's position in 3D space, for example, using three Cartesian coordinates (x, y, and z) and/or using spherical coordinates (r, phi, theta) (e.g., if acquired by a rotating sensor). The positions of points in a point cloud may be quantized according to a space precision. The space precision may be the same or different in each dimension. The quantization process may create a grid in 3D space. One or more points residing within each sub-grid volume may be mapped to the sub-grid center coordinates, referred to as voxels. A voxel may be considered as a 3D extension of pixels corresponding to the 2D image grid coordinates. A voxel may be referred to as a volumetric pixel. For example, similar to a pixel being the smallest unit in the example of dividing the 2D space (or 2D image) into discrete, uniform (e.g., equally sized) regions, a voxel may be the smallest unit of volume in the example of dividing 3D space into discrete, uniform regions. The sub-grid center coordinates may correspond to voxels. The sub-grid center coordinates may be referred to as a voxelized grid. A point in a point cloud may comprise one or more types of attribute information. Attribute information may indicate a property of a point's visual appearance. For example, attribute information may indicate a texture (e.g., color) of the point, a material type of the point, transparency information of the point, reflectance information of the point, a normal vector to a surface of the point, a velocity at the point, an acceleration at the point, a time stamp indicating when the point was captured, or a modality indicating how the point was captured (e.g., running, walking, or flying). A point in a point cloud may comprise light field data in the form of multiple view-dependent texture information. Light field data may be another type of optional attribute information.

The points in a point cloud may describe an object or a scene. For example, the points in a point cloud may describe the external surface and/or the internal structure of an object or scene. The object or scene may be synthetically generated by a computer. The object or scene may be generated from the capture of a real-world object or scene. The geometry information of a real-world object or a scene may be obtained by 3D scanning and/or photogrammetry. 3D scanning may include different types of scanning, for example, laser scanning, structured light scanning, and/or modulated light scanning. 3D scanning may obtain geometry information. 3D scanning may obtain geometry information, for example, by moving one or more laser heads, structured light cameras, and/or modulated light cameras relative to an object or scene being scanned. Photogrammetry may obtain geometry information. Photogrammetry may obtain geometry information, for example, by triangulating the same feature or point in different spatially shifted 2D photographs. Point cloud data may take the form of a point cloud frame. The point cloud frame may describe an object or scene captured at a particular time instance. Point cloud data may take the form of a sequence of point cloud frames. The sequence of point cloud frames may be referred to as a point cloud sequence or point cloud video. The sequence of point cloud frames may describe an object or scene captured at multiple different time instances.

The data size of a point cloud frame or point cloud sequence may be excessive (e.g., too large) for storage and/or transmission in many applications. For example, a single point cloud may comprise over a million points or even billions of points. Each point may comprise geometry information and one or more optional types of attribute information. The geometry information of each point may comprise three Cartesian coordinates (x, y, and z) and/or spherical coordinates (r, phi, theta) that may be each represented, for example, using at least 10 bits per component or 30 bits in total. The attribute information of each point may comprise a texture corresponding to a plurality of (e.g., three) color components (e.g., R, G, and B color components). Each color component may be represented, for example, using 8-10 bits per component or 24-30 bits in total. For example, a single point may comprise at least 54 bits of information, with at least 30 bits of geometry information and at least 24 bits of texture. If a point cloud frame includes a million such points, each point cloud frame may require 54 million bits or 54 megabits to represent. For dynamic point clouds that change over time, at a frame rate of 30 frames per second, a data rate of 1.62 gigabits per second may be required to send (e.g., transmit) the points of the point cloud sequence. Raw representations of point clouds may require a large amount of data, and the practical deployment of point-cloud-based technologies may need compression technologies that enable the storage and distribution of point clouds with a reasonable cost.

Encoding may be used to compress and/or reduce the data size of a point cloud frame or point cloud sequence to provide for more efficient storage and/or transmission. Decoding may be used to decompress a compressed point cloud frame or point cloud sequence for display and/or other forms of consumption (e.g., by a machine learning based device, neural network-based device, artificial intelligence-based device, or other forms of consumption by other types of machine-based processing algorithms and/or devices). Compression of point clouds may be lossy (introducing differences relative to the original data) for the distribution to and visualization by an end-user, for example, on AR or VR glasses or any other 3D-capable device. Lossy compression may allow for a high ratio of compression but may imply a tradeoff between compression and visual quality perceived by an end-user. Other frameworks, for example, frameworks for medical applications or autonomous driving, may require lossless compression to avoid altering the results of a decision obtained, for example, based on the analysis of the sent (e.g., transmitted) and decompressed point cloud frame.

FIG. 1 shows an example point cloud coding (e.g., encoding and/or decoding) system 100. Point cloud coding system 100 may comprise a source device 102, a transmission medium 104, and a destination device 106. Source device 102 may encode a point cloud sequence 108 into a bitstream 110 for more efficient storage and/or transmission. Source device 102 may store and/or send (e.g., transmit) bitstream 110 to destination device 106 via transmission medium 104. Destination device 106 may decode bitstream 110 to display point cloud sequence 108 or for other forms of consumption (e.g., further analysis, storage, etc.). Destination device 106 may receive bitstream 110 from source device 102 via a storage medium or transmission medium 104. Source device 102 and destination device 106 may include any number of different devices. Source device 102 and destination device 106 may include, for example, a cluster of interconnected computer systems acting as a pool of seamless resources (also referred to as a cloud of computers or cloud computer), a server, a desktop computer, a laptop computer, a tablet computer, a smart phone, a wearable device, a television, a camera, a video gaming console, a set-top box, a video streaming device, a vehicle (e.g., an autonomous vehicle), or a head-mounted display. A head-mounted display may allow a user to view a VR, AR, or MR scene and adjust the view of the scene, for example, based on movement of the user's head. A head-mounted display may be connected (e.g., tethered) to a processing device (e.g., a server, a desktop computer, a set-top box, or a video gaming console) or may be fully self-contained.

A source device 102 may comprise a point cloud source 112, an encoder 114, and an output interface 116. A source device 102 may comprise a point cloud source 112, an encoder 114, and an output interface 116, for example, to encode point cloud sequence 108 into a bitstream 110. Point cloud source 112 may provide (e.g., generate) point cloud sequence 108, for example, from a capture of a natural scene and/or a synthetically generated scene. A synthetically generated scene may be a scene comprising computer generated graphics. Point cloud source 112 may comprise one or more point cloud capture devices, a point cloud archive comprising previously captured natural scenes and/or synthetically generated scenes, a point cloud feed interface to receive captured natural scenes and/or synthetically generated scenes from a point cloud content provider, and/or a processor(s) to generate synthetic point cloud scenes. The point cloud capture devices may include, for example, one or more laser scanning devices, structured light scanning devices, modulated light scanning devices, and/or passive scanning devices.

Point cloud sequence 108 may comprise a series of point cloud frames 124 (e.g., an example shown in FIG. 1). A point cloud frame may describe an object or scene captured at a particular time instance. Point cloud sequence 108 may achieve the impression of motion by using a constant or variable time to successively present point cloud frames 124 of point cloud sequence 108. A point cloud frame may comprise a collection of points (e.g., voxels) 126 in 3D space. Each point 126 may comprise geometry information that may indicate the point's position in 3D space. The geometry information may indicate, for example, the point's position in 3D space using three Cartesian coordinates (x, y, and z). One or more of points 126 may comprise one or more types of attribute information. Attribute information may indicate a property of a point's visual appearance. For example, attribute information may indicate, for example, a texture (e.g., color) of a point, a material type of a point, transparency information of a point, reflectance information of a point, a normal vector to a surface of a point, a velocity at a point, an acceleration at a point, a time stamp indicating when a point was captured, a modality indicating how a point was captured (e.g., running, walking, or flying), etc. One or more of points 126 may comprise, for example, light field data in the form of multiple view-dependent texture information. Light field data may be another type of optional attribute information. Color attribute information of one or more of points 126 may comprise a luminance value and two chrominance values. The luminance value may represent the brightness (e.g., luma component, Y) of the point. The chrominance values may respectively represent the blue and red components of the point (e.g., chroma components, Cb and Cr) separate from the brightness. Other color attribute values may be represented, for example, based on different color schemes (e.g., an RGB or monochrome color scheme).

Encoder 114 may encode point cloud sequence 108 into a bitstream 110. To encode point cloud sequence 108, encoder 114 may use one or more lossless or lossy compression techniques to reduce redundant information in point cloud sequence 108. To encode point cloud sequence 108, encoder 114 may use one or more prediction techniques to reduce redundant information in point cloud sequence 108. Redundant information is information that may be predicted at a decoder 120 and may not be needed to be sent (e.g., transmitted) to decoder 120 for accurate decoding of point cloud sequence 108. For example, Motion Picture Expert Group (MPEG) introduced a geometry-based point cloud compression (G-PCC) standard (ISO/IEC standard 23090-9: Geometry-based point cloud compression). G-PCC specifies the encoded bitstream syntax and semantics for transmission and/or storage of a compressed point cloud frame and the decoder operation for reconstructing the compressed point cloud frame from the bitstream. During standardization of G-PCC, a reference software (ISO/IEC standard 23090-21: Reference Software for G-PCC) was developed to encode the geometry and attribute information of a point cloud frame. To encode geometry information of a point cloud frame, the G-PCC reference software encoder may perform voxelization. The G-PCC reference software encoder may perform voxelization, for example, by quantizing positions of points in a point cloud. Quantizing positions of points in a point cloud may create a grid in 3D space. The G-PCC reference software encoder may map the points to the center coordinates of the sub-grid volume (e.g., voxel) that their quantized locations reside in. The G-PCC reference software encoder may perform geometry analysis using an occupancy tree to compress the geometry information. The G-PCC reference software encoder may entropy encode the result of the geometry analysis to further compress the geometry information. To encode attribute information of a point cloud, the G-PCC reference software encoder may use a transform tool, such as Region Adaptive Hierarchical Transform (RAHT), the Predicting Transform, and/or the Lifting Transform. The Lifting Transform may be built on top of the Predicting Transform. The Lifting Transform may include an extra update/lifting step. The Lifting Transform and the Predicting Transform may be referred to as Predicting/Lifting Transform or pred lift. Encoder 114 may operate in a same or similar manner to an encoder provided by the G-PCC reference software.

Output interface 116 may be configured to write and/or store bitstream 110 onto transmission medium 104. The bitstream 110 may be sent (e.g., transmitted) to destination device 106. In addition or alternatively, output interface 116 may be configured to send (e.g., transmit), upload, and/or stream bitstream 110 to destination device 106 via transmission medium 104. Output interface 116 may comprise a wired and/or wireless transmitter configured to send (e.g., transmit), upload, and/or stream bitstream 110 according to one or more proprietary, open-source, and/or standardized communication protocols. The one or more proprietary, open-source, and/or standardized communication protocols may include, for example, Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, Wireless Application Protocol (WAP) standards, and/or any other communication protocol.

Transmission medium 104 may comprise a wireless, wired, and/or computer readable medium. For example, transmission medium 104 may comprise one or more wires, cables, air interfaces, optical discs, flash memory, and/or magnetic memory. In addition or alternatively, transmission medium 104 may comprise one or more networks (e.g., the Internet) or file server(s) configured to store and/or send (e.g., transmit) encoded video data.

Destination device 106 may decode bitstream 110 into point cloud sequence 108 for display or other forms of consumption. Destination device 106 may comprise one or more of an input interface 118, a decoder 120, and/or a point cloud display 122. Input interface 118 may be configured to read bitstream 110 stored on transmission medium 104. Bitstream 110 may be stored on transmission medium 104 by source device 102. In addition or alternatively, input interface 118 may be configured to receive, download, and/or stream bitstream 110 from source device 102 via transmission medium 104. Input interface 118 may comprise a wired and/or wireless receiver configured to receive, download, and/or stream bitstream 110 according to one or more proprietary, open-source, standardized communication protocols, and/or any other communication protocol. Examples of the protocols include Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, and Wireless Application Protocol (WAP) standards.

Decoder 120 may decode point cloud sequence 108 from encoded bitstream 110. For example, decoder 120 may operate in a same or similar manner as a decoder provided by G-PCC reference software. Decoder 120 may decode a point cloud sequence that approximates a point cloud sequence 108. Decoder 120 may decode a point cloud sequence that approximates a point cloud sequence 108 due to, for example, lossy compression of the point cloud sequence 108 by encoder 114 and/or errors introduced into encoded bitstream 110, for example, if transmission to destination device 106 occurs.

Point cloud display 122 may display a point cloud sequence 108 to a user. The point cloud display 122 may comprise, for example, a cathode rate tube (CRT) display, a liquid crystal display (LCD), a plasma display, a light emitting diode (LED) display, a 3D display, a holographic display, a head-mounted display, or any other display device suitable for displaying point cloud sequence 108.

Point cloud coding (e.g., encoding/decoding) system 100 is presented by way of example and not limitation. Point cloud coding systems different from the point cloud coding system 100 and/or modified versions of the point cloud coding system 100 may perform the methods and processes as described herein. For example, the point cloud coding system 100 may comprise other components and/or arrangements. Point cloud source 112 may, for example, be external to source device 102. Point cloud display device 122 may, for example, be external to destination device 106 or omitted altogether (e.g., if point cloud sequence 108 is intended for consumption by a machine and/or storage device). Source device 102 may further comprise, for example, a point cloud decoder. Destination device 106 may comprise, for example, a point cloud encoder. For example, source device 102 may be configured to further receive an encoded bit stream from destination device 106. Receiving an encoded bit stream from destination device 106 may support two-way point cloud transmission between the devices.

As described herein, an encoder may quantize the positions of points in a point cloud according to a space precision, which may be the same or different in each dimension of the points. The quantization process may create a grid in 3D space. The encoder may map any points residing within each sub-grid volume to the sub-grid center coordinates, referred to as a voxel or a volumetric pixel. A voxel may be considered as a 3D extension of pixels corresponding to 2D image grid coordinates.

An encoder may represent or code a point cloud (e.g., a voxelized). An encoder may represent or code a point cloud, for example, using an occupancy tree. For example, the encoder may split the initial volume or cuboid containing the point cloud into sub-cuboids. The initial volume or cuboid may be referred to as a bounding box. A cuboid may be, for example, a cube. The encoder may recursively split each sub-cuboid that contains at least one point of the point cloud. The encoder may not further split sub-cuboids that do not contain at least one point of the point cloud. A sub-cuboid that contains at least one point of the point cloud may be referred to as an occupied sub-cuboid. A sub-cuboid that does not contain at least one point of the point cloud may be referred to as an unoccupied sub-cuboid. The encoder may split an occupied sub-cuboid into, for example, two sub-cuboids (to form a binary tree), four sub-cuboids (to form a quadtree), or eight sub-cuboids (to form an octree). The encoder may split an occupied sub-cuboid to obtain further sub-cuboids. The sub-cuboids may have the same size and shape at a given depth level of the occupancy tree. The sub-cuboids may have the same size and shape at a given depth level of the occupancy tree, for example, if the encoder splits the occupied sub-cuboid along a plane passing through the middle of edges of the sub-cuboid.

The initial volume or cuboid containing the point cloud may correspond to the root node of the occupancy tree. Each occupied sub-cuboid, split from the initial volume, may correspond to a node (of the root node) in a second level of the occupancy tree. Each occupied sub-cuboid, split from an occupied sub-cuboid in the second level, may correspond to a node (off the occupied sub-cuboid in the second level from which it was split) in a third level of the occupancy tree. The occupancy tree structure may continue to form in this manner for each recursive split iteration until, for example, some maximum depth level of the occupancy tree is reached or each occupied sub-cuboid has a volume corresponding to one voxel.

Each non-leaf node of the occupancy tree may comprise or be associated with an occupancy word representing the occupancy state of the cuboid corresponding to the node. For example, a node of the occupancy tree corresponding to a cuboid that is split into 8 sub-cuboids may comprise or be associated with a 1-byte occupancy word. Each bit (referred to as an occupancy bit) of the 1-byte occupancy word may represent or indicate the occupancy of a different one of the eight sub-cuboids. Occupied sub-cuboids may be each represented or indicated by a binary "1" in the 1-byte occupancy word. Unoccupied sub-cuboids may be each represented or indicated by a binary "0" in the 1-byte occupancy word. Occupied and un-occupied sub-cuboids may be represented or indicated by opposite 1-bit binary values (e.g., a binary "0" representing or indicating an occupied sub-cuboid and a binary "1" representing or indicating an unoccupied sub-cuboid) in the 1-byte occupancy word.

Each bit of an occupancy word may represent or indicate the occupancy of a different one of the eight sub-cuboids. Each bit of an occupancy word may represent or indicate the occupancy of a different one of the eight sub-cuboids, for example, following the so-called Morton order. For example, the least significant bit of an occupancy word may represent or indicate, for example, the occupancy of a first one of the eight sub-cuboids following the Morton order. The second least significant bit of an occupancy word may represent or indicate, for example, the occupancy of a second one of the eight sub-cuboids following the Morton order, etc.

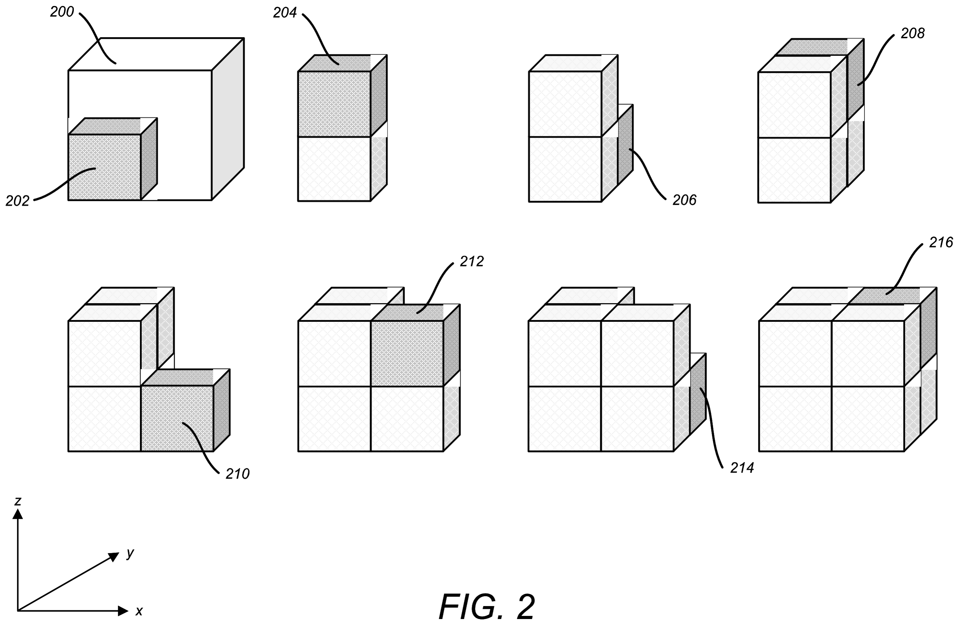

FIG. 2 shows an example Morton order. More specifically, FIG. 2 shows a Morton order of eight sub-cuboids 202-216 split from a cuboid 200. Sub-cuboids 202-216 may be labeled, for example, based on their Morton order, with child node 202 being the first in Morton order and child node 216 being the last in Morton order. The Morton order for sub-cuboids 202-216 may be a local lexicographic order in xyz.

The geometry of a point cloud may be represented by, and may be determined from, the initial volume and the occupancy words of the nodes in an occupancy tree. An encoder may send (e.g., transmit) the initial volume and the occupancy words of the nodes in the occupancy tree in a bitstream to a decoder for reconstructing the point cloud. The encoder may entropy encode the occupancy words. The encoder may entropy encode the occupancy words, for example, before sending (e.g., transmitting) the initial volume and the occupancy words of the nodes in the occupancy tree. The encoder may encode an occupancy bit of an occupancy word of a node corresponding to a cuboid. The encoder may encode an occupancy bit of an occupancy word of a node corresponding to a cuboid, for example, based on one or more occupancy bits of occupancy words of other nodes corresponding to cuboids that are adjacent or spatially close to the cuboid of the occupancy bit being encoded.

An encoder and/or a decoder may code (e.g., encode and/or decode) occupancy bits of occupancy words in sequence of a scan order. The scan order may also be referred to as a scanning order. For example, an encoder and/or a decoder may scan an occupancy tree in breadth-first order. All the occupancy words of the nodes of a given depth (e.g., level) within the occupancy tree may be scanned. All the occupancy words of the nodes of a given depth (e.g., level) within the occupancy tree may be scanned, for example, before scanning the occupancy words of the nodes of the next depth (e.g., level). Within a given depth, the encoder and/or decoder may scan the occupancy words of nodes in the Morton order. Within a given node, the encoder and/or decoder may scan the occupancy bits of the occupancy word of the node further in the Morton order.

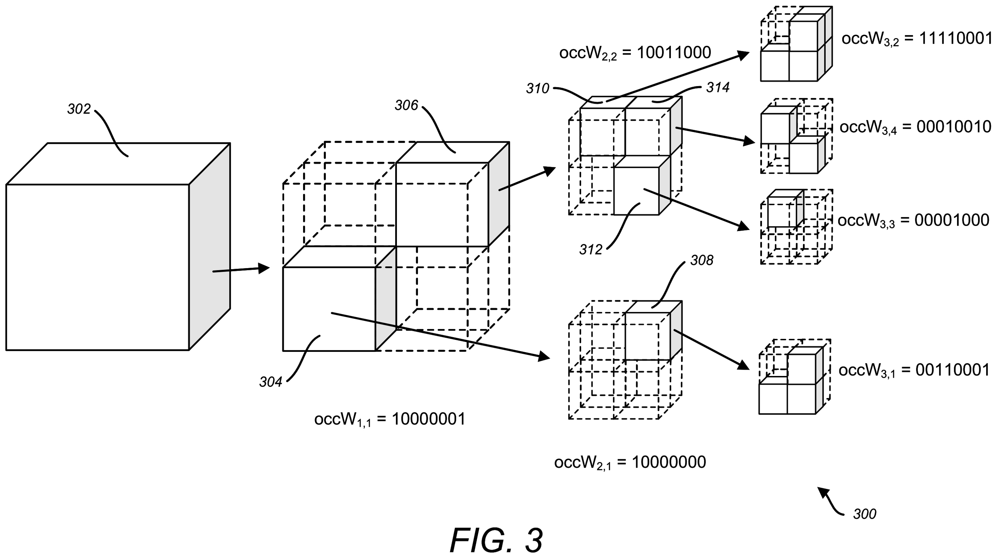

FIG. 3 shows an example scanning order. FIG. 3 shows an example scanning order (e.g., breadth-first order as described herein) for an occupancy tree 300. More specifically, FIG. 3 shows a scanning order for the first three example levels of an occupancy tree 300. A plurality of cuboids (e.g., cubes) may be generated, for example, at each level of the occupancy tree 300. In FIG. 3, a cuboid (e.g., cube) 302 corresponding to a root node of the occupancy tree 300 may be divided into eight sub-cuboids (e.g., sub-cubes). Two sub-cuboids 304 and 306 of the eight sub-cuboids may be occupied. The other six sub-cuboids of the eight sub-cuboids may be unoccupied. Following the Morton order, a first eight-bit occupancy word (e.g., occW_{1,1}) may be constructed to represent the occupancy word of the root node. An (e.g., each) occupancy bit of the first eight-bit occupancy word (e.g., occW_{1,1}) may represent or indicate the occupancy of a sub-cube of the eight sub-cuboids in the Morton order. For example, the least significant occupancy bit of the first eight-bit occupancy word occW_{1,1} may represent or indicate the occupancy of the first sub-cuboid of the eight sub-cuboids in the Morton order. The second least significant occupancy bit of the first eight-bit occupancy word occW_{1,1} may represent or indicate the occupancy of the second sub-cuboid of the eight sub-cuboids in the Morton order, etc.

Each of occupied sub-cuboids (e.g., two occupied sub-cuboids 304 and 306) may correspond to a node off the root node in a second level of an occupancy tree 300. The occupied sub-cuboids (e.g., two occupied sub-cuboids 304 and 306) may be each further split into eight sub-cuboids. For example, one of the sub-cuboids 308 of the eight sub-cuboids split from the sub-cube 304 may be occupied, and the other seven sub-cuboids may be unoccupied. Three of the sub-cuboids 310, 312, and 314 of the eight sub-cuboids split from the sub-cube 306 may be occupied, and the other five sub-cuboids of the eight sub-cuboids split from the sub-cube 306 may be unoccupied. Two second eight-bit occupancy words occW_{2,1} and occW_{2,2} may be constructed in this order to respectively represent the occupancy word of the node corresponding to the sub-cuboid 304 and the occupancy word of the node corresponding to the sub-cuboid 306.

Each of occupied sub-cuboids (e.g., four occupied sub-cuboids 308, 310, 312, and 314) may correspond to a node in a third level of an occupancy tree 300. The occupied sub-cuboids (e.g., four occupied sub-cuboids 308, 310, 312, and 314) may be each further split into eight sub-cuboids or 32 sub-cuboids in total. For example, four third level eight-bit occupancy words occW_{3,1}, occW_{3,2}, occW_{3,3} and occW_{3,4} may be constructed in this order to respectively represent the occupancy word of the node corresponding to the sub-cuboid 308, the occupancy word of the node corresponding to the sub-cuboid 310, the occupancy word of the node corresponding to the sub-cuboid 312, and the occupancy word of the node corresponding to the sub-cuboid 314.

Occupancy words of an example occupancy tree 300 may be entropy coded (e.g., entropy encoded by an encoder and/or entropy decoded by a decoder), for example, following the scanning order discussed herein (e.g., Morton order). The occupancy words of the example occupancy tree 300 may be entropy coded (e.g., entropy encoded by an encoder and/or entropy decoded by a decoder) as the succession of the seven occupancy words occW_{1,1} to occW_{3,4}, for example, following the scanning order discussed herein. The scanning order discussed herein may be a breadth-first scanning order. The occupancy word(s) of all node(s) having the same depth (or level) as a current parent node may have already been entropy coded, for example, if the occupancy word of a current child node belonging to the current parent node is being entropy coded. For example, the occupancy word(s) of all node(s) having the same depth (e.g., level) as the current child node and having a lower Morton order than the current child node may have also already been entropy coded. Part of the already coded occupancy word(s) may be used to entropy code the occupancy word of the current child node. The already coded occupancy word(s) of neighboring parent and child node(s) may be used, for example, to entropy code the occupancy word of the current child node. The occupancy bit(s) of the occupancy word having a lower Morton order than a particular occupancy bit may have also already been entropy coded and may be used to code the occupancy bit of the occupancy word of the current child node, for example, if the particular occupancy bit of the occupancy word of the current child node is being coded (e.g., entropy coded).

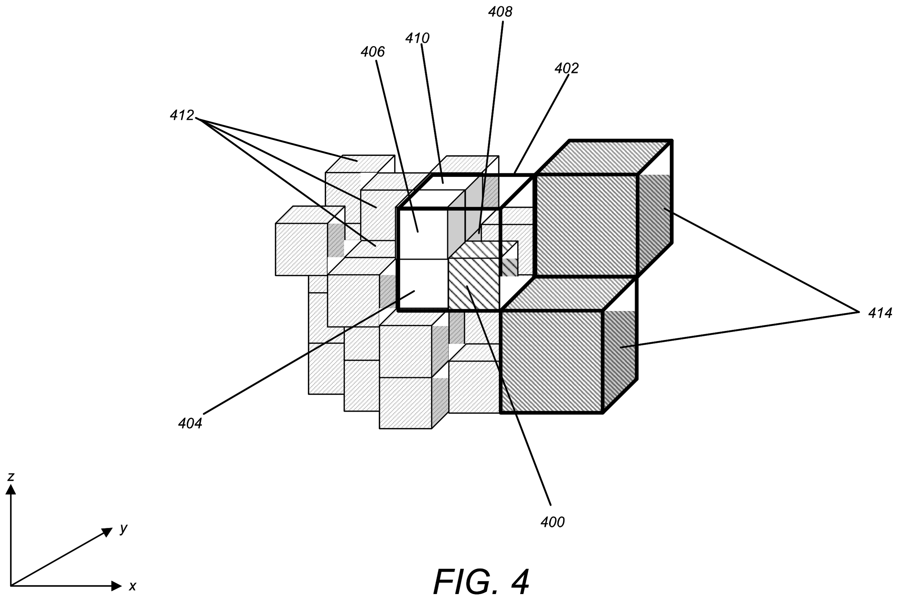

FIG. 4 shows an example neighborhood of cuboids for coding the occupancy of a child cuboid. More specifically, FIG. 4 shows an example neighborhood of cuboids with already-coded (e.g., previously-coded) occupancy bits. The neighborhood of cuboids with already-coded occupancy bits may be used to entropy code the occupancy bit of a current child cuboid 400. The neighborhood of cuboids with already-coded occupancy bits may be determined, for example, based on the scanning order of an occupancy tree representing the geometry of the cuboids in FIG. 4 as discussed herein. The neighborhood of cuboids, of a current child cuboid, may include one or more of: a cuboid adjacent to the current child cuboid, a cuboid sharing a vertex with the current child cuboid, a cuboid sharing an edge with the current child cuboid, a cuboid sharing a face with the current child cuboid, a parent cuboid adjacent to the current child cuboid, a parent cuboid sharing a vertex with the current child cuboid, a parent cuboid sharing an edge with the current child cuboid, a parent cuboid sharing a face with the current child cuboid, a parent cuboid adjacent to the current parent cuboid, a parent cuboid sharing a vertex with the current parent cuboid, a parent cuboid sharing an edge with the current parent cuboid, a parent cuboid sharing a face with the current parent cuboid, etc. As shown in FIG. 4, current child cuboid 400 may belong to a current parent cuboid 402. Following the scanning order of the occupancy words and occupancy bits of nodes of the occupancy tree, the occupancy bits of four child cuboids 404, 406, 408, and 410, belonging to the same current parent cuboid 402, may have already been coded. The occupancy bit of child cuboids 412 of preceding parent cuboids may have already been coded. The occupancy bits of parent cuboids 414, for which the occupancy bits of child cuboids have not already been coded, may have already been coded. The already-coded occupancy bits of cuboids 404, 406, 408, 410, 412, and 414 may be used to code the occupancy bit of the current child cuboid 400.

The number (e.g., quantity) of possible occupancy configurations (e.g., sets of one or more occupancy words and/or occupancy bits) for a neighborhood of a current child cuboid may be 2^{N}, where N is the number (e.g., quantity) of cuboids in the neighborhood of the current child cuboid with already-coded occupancy bits. The neighborhood of the current child cuboid may comprise several dozens of cuboids. The neighborhood of the current child cuboid (e.g., several dozens of cuboids) may comprise 26 adjacent parent cuboids sharing a face, an, edge, and/or a vertex with the parent cuboid of the current child cuboid and also several adjacent child cuboids having occupancy bits already coded sharing a face, an edge, or a vertex with the current child cuboid. The occupancy configuration for a neighborhood of the current child cuboid may have billions of possible occupancy configurations, even limited to a subset of the adjacent cuboids, making its direct use impractical. An encoder and/or decoder may use the occupancy configuration for a neighborhood of the current child cuboid to select the context (e.g., a probability model), among a set of contexts, of a binary entropy coder (e.g., binary arithmetic coder) that may code the occupancy bit of the current child cuboid. The context-based binary entropy coding may be similar to the Context Adaptive Binary Arithmetic Coder (CABAC) used in MPEG-H Part 2 (also known as High Efficiency Video Coding (HEVC)).

An encoder and/or a decoder may use several methods to reduce the occupancy configurations for a neighborhood of a current child cuboid being coded to a practical number (e.g., quantity) of reduced occupancy configurations. The 2⁶ or 64 occupancy configurations of the six adjacent parent cuboids sharing a face with the parent cuboid of the current child cuboid may be reduced to 9 occupancy configurations. The occupancy configurations may be reduced by using geometry invariance. An occupancy score for the current child cuboid may be obtained from the 2²⁶ occupancy configurations of the 26 adjacent parent cuboids. The score may be further reduced into a ternary occupancy prediction (e.g., "predicted occupied," "unsure", or "predicted unoccupied") by using score thresholds. The number (e.g., quantity) of occupied adjacent child cuboids and the number (e.g., quantity) of unoccupied adjacent child cuboids may be used instead of the individual occupancies of these child cuboids.

An encoder and/or a decoder using/employing one or more of the methods described herein may reduce the number (e.g., quantity) of possible occupancy configurations for a neighborhood of a current child cuboid to a more manageable number (e.g., a few thousands). It has been observed that instead of associating a reduced number (e.g., quantity) of contexts (e.g., probability models) directly to the reduced occupancy configurations, another mechanism may be used, namely Optimal Binary Coders with Update on the Fly (OBUF). An encoder and/or a decoder may implement OBUF to limit the number (e.g., quantity) of contexts to a lower number (e.g., 32 contexts).

OBUF may use a limited number (e.g., 32) of contexts (e.g., probability models). The number (e.g., quantity) of contexts in OBUF may be a fixed number (e.g., fixed quantity). The contexts used by OBUF may be ordered, referred to by a context index (e.g., a context index in the range of 0 to 31), and associated from a lowest virtual probability to a highest virtual probability to code a "1". A Look-Up Table (LUT) of context indices may be initialized at the beginning of a point cloud coding process. For example, the LUT may initially point to a context (e.g., with a context index 15) with the median virtual probability to code a "1" for all input. The LUT may initially point to a context with the median virtual probability to code a "1", among the limited number (e.g., quantity) of contexts, for all input. This LUT may take an occupancy configuration for a neighborhood of current child cuboid as input and output the context index associated with the occupancy configuration. The LUT may have as many entries as reduced occupancy configurations (e.g., around a few thousand entries). The coding of the occupancy bit of a current child cuboid may comprise steps including determining the reduced occupancy configuration of the current child node, obtaining a context index by using the reduced occupancy configuration as an entry to the LUT, coding the occupancy bit of the current child cuboid by using the context pointed to (or indicated) by the context index, and updating the LUT entry corresponding to the reduced occupancy configuration, for example, based on the value of the coded occupancy bit of the current child cuboid. The LUT entry may be decreased to a lower context index value, for example, if a binary "0" (e.g., indicating the current child cuboid is unoccupied) is coded. The LUT entry may be increased to a higher context index value, for example, if a binary "1" (e.g., indicating the current child cuboid is occupied) is coded. The update process of the context index may be, for example, based on a theoretical model of optimal distribution for virtual probabilities associated with the limited number (e.g., quantity) of contexts. This virtual probability may be fixed by a model and may be different from the internal probability of the context that may evolve, for example, if the coding of bits of data occurs. The evolution of the internal context may follow a well-known process similar to the process in CABAC.

An encoder and/or a decoder may implement a "dynamic OBUF" scheme. The "dynamic OBUF" scheme may enable an encoder and/or a decoder to handle a much larger number (e.g., quantity) of occupancy configurations for a neighborhood of a current child cuboid, for example, than general OBUF. The use of a larger number (e.g., quantity) of occupancy configurations for a neighborhood of a current child cuboid may lead to improved compression capabilities, and may maintain complexity within reasonable bounds. By using an occupancy tree compressed by OBUF, an encoder and/or a decoder may reach a lossless compression performance as good as 1 bit per point (bpp) for coding the geometry of dense point clouds. An encoder and/or a decoder may implement dynamic OBUF to potentially further reduce the bit rate by more than 25% to 0.7 bpp.

OBUF may not take as input a large variety of reduced occupancy configurations for a neighborhood of a current child cuboid, and may potentially cause a loss of useful correlation. With OBUF, the size of the LUT of context indices may be increased to handle more various occupancy configurations for a neighborhood of a current child cuboid as input. Due to such increase, statistics may be diluted, and compression performance may be worsened. For example, if the LUT has millions of entries and the point cloud has a hundred thousand points, then most of the entries may be never visited (e.g., looked up, accessed, etc.). Many entries may be visited only a few times and their associated context index may not be updated enough times to reflect any meaningful correlation between the occupancy configuration value and the probability of occupancy of the current child cuboid. Dynamic OBUF may be implemented to mitigate the dilution of statistics due to the increase of the number (e.g., quantity) of occupancy configurations for a neighborhood of a current child cuboid. This mitigation may be performed by a "dynamic reduction" of occupancy configurations in dynamic OBUF.

Dynamic OBUF may add an extra step of reduction of occupancy configurations for a neighborhood of a current child cuboid, for example, before using the LUT of context indices. This step may be called a dynamic reduction because it evolves, for example, based on the progress of the coding of the point cloud or, more precisely, based on already visited (e.g., looked up in the LUT) occupancy configurations.

As discussed herein, many possible occupancy configurations for a neighborhood of a current child cuboid may be potentially involved but only a subset may be visited if the coding of a point cloud occurs. This subset may characterize the type of the point cloud. For example, most of the visited occupancy configurations may exhibit occupied adjacent cuboids of a current child cuboid, for example, if AR or VR dense point clouds are being coded. On the other hand, most of the visited occupancy configurations may exhibit only a few occupied adjacent cuboids of a current child cuboid, for example, if sensor-acquired sparse point clouds are being coded. The role of the dynamic reduction may be to obtain a more precise correlation, for example, based on the most visited occupancy configuration while putting aside (e.g., reducing aggressively) other occupancy configurations that are much less visited. The dynamic reduction may be updated on-the-fly. The dynamic reduction may be updated on-the-fly, for example, after each visit (e.g., a lookup in the LUT) of an occupancy configuration, for example, if the coding of occupancy data occurs.

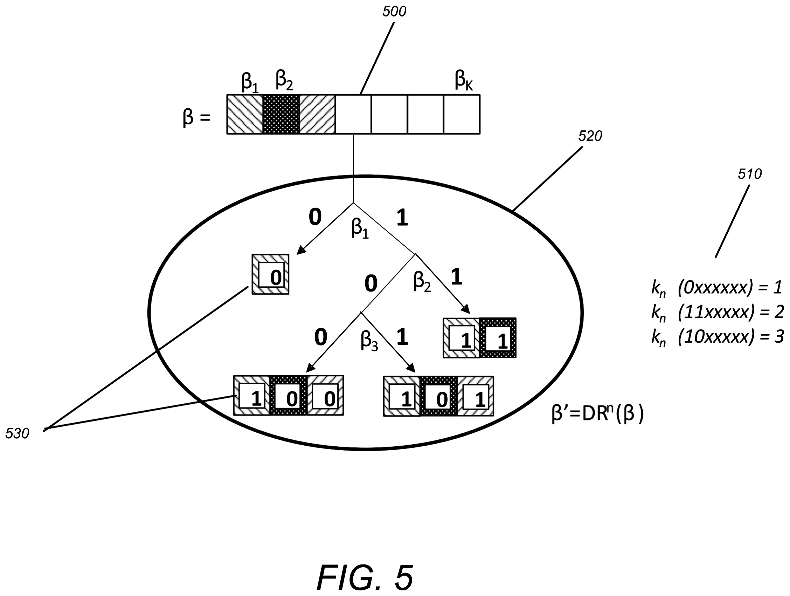

FIG. 5 shows an example of a dynamic reduction function DR that may be used in dynamic OBUF. The dynamic reduction function DR may be obtained by masking bits βⱼ of occupancy configurations 500: $β = {β}_{1} … {β}_{K}$ made of K bits. The size of the mask may decrease, for example, if occupancy configurations are visited (e.g., looked up in the LUT) a certain number (e.g., quantity) of times. The initial dynamic reduction function DR⁰ may mask all bits for all occupancy configurations such that it is a constant function DR⁰(β) = 0 for all occupancy configurations β. The dynamic reduction function may evolve from a function DRⁿ to an updated function DRⁿ⁺¹. The dynamic reduction function may evolve from a function DRⁿ to an updated function DRⁿ⁺¹, for example, after each coding of an occupancy bit. The function may be defined by: $β ′ = {DR}^{n} \left(β\right) = {β}_{1} … {β}_{kn \left(β\right)}$ where kₙ(β) 510 is the number (e.g., quantity) of non-masked bits. The initialization of DR⁰ may correspond to k₀(β)=0, and the natural evolution of the reduction function toward finer statistics may lead to an increasing number (e.g., quantity) of non-masked bits kₙ(β) ≤ kₙ₊₁(β). The dynamic reduction function may be entirely determined by the values of kₙ for all occupancy configurations β.

The visits (e.g., instances of a lookup in the LUT) to occupancy configurations may be tracked by a variable NV(β') for all dynamically reduced occupancy configurations β'= DRⁿ(β). The corresponding number (e.g., quantity) of visits NV(β^{V}') may be increased by one, for example, after each instance of coding of an occupancy bit based on an occupancy configuration β^{V}. If this number (e.g., quantity) of visits NV(β^{V}') is greater than a threshold th_{V}, $NV \left({β}^{V ′}\right) > {th}_{v}$ then the number (e.g., quantity) of unmasked bits kₙ(β) may be increased by one for all occupancy configurations β being dynamically reduced to β^{V}'. This corresponds to replacing the dynamically reduced occupancy configuration β^{V}' by the two new dynamically reduced occupancy configurations β⁰' and β¹' defined by ${β}^{0} ′ = {β}^{V} ′ 0 = {{β}^{V}}_{1} … {{β}^{V}}_{kn \left(β\right)} 0 and {β}^{1} ′ = {β}^{V} ′ 1 = {{β}^{V}}_{1} … {{β}^{V}}_{kn \left(β\right)} 1 .$

In other words, the number (e.g., quantity) of unmasked bits has been increased by one kₙ₊₁(β) = kₙ(β) + 1 for all occupancy configurations β such that DRⁿ(β) = B^{V}'. The number (e.g., quantity) of visits of the two new dynamically reduced occupancy configurations may be initialized to zero: $NV \left({β}^{0}′\right) = NV \left({β}^{1}′\right) = 0 .$

At the start of the coding, the initial number (e.g., quantity) of visits for the initial dynamic reduction function DR⁰ may be set to $NV \left({DR}^{0}\left(β\right)\right) = NV \left(0\right) = 0 ,$ and the evolution of NV on dynamically reduced occupancy configurations may be entirely defined.

The corresponding LUT entry LUT[β^{V}'] may be replaced by the two new entries LUT[β⁰'] and LUT[β¹'] that are initialized by the coder index associated with β^{V}'. The corresponding LUT entry LUT[β^{V}'] may be replaced by the two new entries LUT[β⁰'] and LUT[β¹'] that are initialized by the coder index associated with β^{V}', for example, if a dynamically reduced occupancy configuration β^{V}' is replaced by the two new dynamically reduced occupancy configurations β⁰' and β¹'$LUT \left[{β}^{0 '}\right] = LUT \left[{β}^{1 '}\right] = LUT \left[{β}^{V '}\right] ,$ and then evolve separately. The evolution of the LUT of coder indices on dynamically reduced occupancy configurations may be entirely defined.

The reduction function DRⁿ may be modeled by a series of growing binary trees Tⁿ 520 whose leaf nodes 530 are the reduced occupancy configurations β' = DRⁿ(β). The initial tree may be the single root node associated with 0 = DR⁰(β). The replacement of the dynamically reduced to β^{V}' by β⁰' and β¹' may correspond to growing the tree Tⁿ from the leaf node associated with β^{V}', for example, by attaching to it two new nodes associated with β⁰' and β¹'. The tree Tⁿ⁺¹ may be obtained by this growth. The number (e.g., quantity) of visits NV and the LUT of context indices may be defined on the leaf nodes and evolve with the growth of the tree through equations (I) and (II).

The practical implementation of dynamic OBUF may be made by the storage of the array NV[β'] and the LUT[β'] of context indices, as well as the trees Tⁿ 520. An alternative to the storage of the trees may be to store the array kₙ[β] 510 of the number (e.g., quantity) of non-masked bits.

A limitation for implementing dynamic OBUF may be its memory footprint. In some applications, a few million occupancy configurations may be practically handled, leading to about 20 bits βᵢ constituting an entry configuration β to the reduction function DR. Each bit βᵢ may correspond to the occupancy status of a neighboring cuboid of a current child cuboid or a set of neighboring cuboids of a current child cuboid.

Higher (e.g., more significant) bits βᵢ (e.g., β₀, β₁, etc.) may be the first bits to be unmasked. Higher (e.g., more significant) bits βᵢ (e.g., β₀, β₁, etc.) may be the first bits to be unmasked, for example, during the evolution of the dynamic reduction function DR. The order of neighbor-based information put in the bits βᵢ may impact the compression performance. Neighboring information may be ordered from higher (e.g., highest) priority to lower priority and put in this order into the bits βᵢ, from higher to lower weight. The priority may be, from the most important to the least important, occupancy of sets of adjacent neighboring child cuboids, then occupancy of adjacent neighboring child cuboids, then occupancy of adjacent neighboring parent cuboids, then occupancy of non-adjacent neighboring child nodes, and finally occupancy of non-adjacent neighboring parent nodes. Adjacent nodes sharing a face with the current child node may also have higher priority than adjacent nodes sharing an edge (but not sharing a face) with the current child node. Adjacent nodes sharing an edge with the current child node may have higher priority than adjacent nodes sharing only a vertex with the current child node.

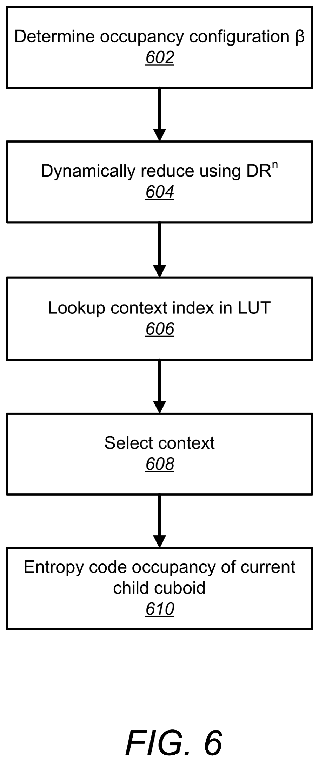

FIG. 6 shows an example method for coding occupancy of a cuboid using dynamic OBUF. More specifically, FIG. 6 shows an example method for coding occupancy bit of a current child cuboid using dynamic OBUF. One or more steps of FIG. 6 may be performed by an encoder and/or a decoder (e.g., the encoder 114 and/or decoder 120 in FIG. 1). All or portions of the flowchart may be implemented by a coder (e.g., the encoder 114 and/or decoder 120 in FIG. 1), an example computer system 3200 in FIG. 32, and/or an example computing device 3330 in FIG. 33.

At step 602, an occupancy configuration (e.g., occupancy configuration β) of the current child cuboid may be determined. The occupancy configuration (e.g., occupancy configuration β) of the current child cuboid may be determined, for example, based on occupancy bits of already-coded cuboids in a neighborhood of the current child cuboid. At step 604, the occupancy configuration (e.g., occupancy configuration β) may be dynamically reduced. The occupancy configuration may be dynamically reduced, for example, using a dynamic reduction function DRⁿ. For example, the occupancy configuration β may be dynamically reduced into a reduced occupancy configuration β' = DRⁿ(β). At step 606, context index may be looked up, for example, in a look-up table (LUT). For example, the encoder and/or decoder may look up context index LUT[B'] in the LUT of the dynamic OBUF. At step 608, context (e.g., probability model) may be selected. For example, the context (e.g., probability model) pointed to by the context index may be selected. At step 610, occupancy of the current child cuboid may be entropy coded. For example, the occupancy bit of the current child cuboid may be entropy coded (e.g., arithmetic coded), for example, based on the context. The occupancy bit of the current child cuboid may be coded based on the occupancy bits of the already-coded cuboids neighboring the current child cuboid.

Although not shown in FIG. 6, the encoder and/or decoder may update the reduction function and/or update the context index. For example, the encoder and/or decoder may update the reduction function DRⁿ into DRⁿ⁺¹ and/or update the context index LUT[β'], for example, based on the occupancy bit of the current child cuboid. The method of FIG. 6 may be repeated for additional or all child cuboids of parent cuboids corresponding to nodes of the occupancy tree in a scan order, such as the scan order discussed herein with respect to FIG. 3.

In general, the occupancy tree is a lossless compression technique. The occupancy tree may be adapted to provide lossy compression, for example, by modifying the point cloud on the encoder side (e.g., down-sampling, removing points, moving points, etc.). The performance of the lossy compression may be weak. The lossy compression may be a useful lossless compression technique for dense point clouds.

One approach to lossy compression for point cloud geometry may be to set the maximum depth of the occupancy tree to not reach the smallest volume size of one voxel but instead to stop at a bigger volume size (e.g., NxNxN cuboids (e.g., cubes), where N > 1). The geometry of the points belonging to each occupied leaf node associated with the bigger volumes may then be modeled. This approach may be particularly suited for dense and smooth point clouds that may be locally modeled by smooth functions such as planes or polynomials. The coding cost may become the cost of the occupancy tree plus the cost of the local model in each of the occupied leaf nodes.

A scheme for modeling the geometry of the points belonging to each occupied leaf node associated with a volume size larger than one voxel may use sets of triangles as local models. The scheme may be referred to as the "TriSoup" scheme. TriSoup is short for "Triangle Soup" because the connectivity between triangles may not be part of the models. An occupied leaf node of an occupancy tree that corresponds to a cuboid with a volume greater than one voxel may be referred to as a TriSoup node. An edge belonging to at least one cuboid corresponding to a TriSoup node may be referred to as a TriSoup edge. A TriSoup node may comprise a presence flag (sₖ) for each TriSoup edge of its corresponding occupied cuboid. A presence flag (sₖ) of a TriSoup edge may indicate whether a TriSoup vertex (Vₖ) is present or not on the TriSoup edge. At most one TriSoup vertex (Vₖ) may be present on a TriSoup edge. For each vertex (Vₖ) present on a TriSoup edge of an occupied cuboid, the TriSoup node corresponding to the occupied cuboid may comprise a position (pₖ) of the vertex (Vₖ) along the TriSoup edge.

In addition to the occupancy words of an occupancy tree, an encoder may entropy encode, for each TriSoup node of the occupancy tree, the TriSoup vertex presence flags and positions of each TriSoup edge belonging to TriSoup nodes of the occupancy tree. A decoder may similarly entropy decode the TriSoup vertex presence flags and positions of each TriSoup edge and vertex along a respective TriSoup edge belonging to a TriSoup node of the occupancy tree, in addition to the occupancy words of the occupancy tree.

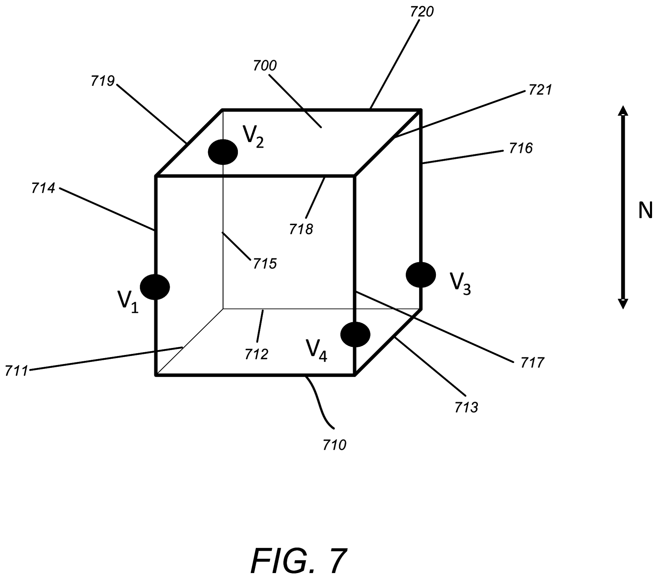

FIG. 7 shows an example of an occupied cuboid (e.g., cube) 700. More specifically, FIG. 7 shows an example of an occupied cuboid (e.g., cube) 700 of size NxNxN (where N > 1) that corresponds to a TriSoup node of an occupancy tree. An occupied cuboid 700 may comprise edges (e.g., TriSoup edges 710 - 721). The TriSoup node, corresponding to the occupied cuboid 700, may comprise a presence flag (sₖ) for each edge (e.g., each TriSoup edge of the TriSoup edges 710-721). For example, the presence flag of a TriSoup edge 714 may indicate that a TriSoup vertex V₁ is present on the TriSoup edge 714. The presence flag of a TriSoup edge 715 may indicate that a TriSoup vertex V₂ is present on the TriSoup edge 715. The presence flag of a TriSoup edge 716 may indicate that a TriSoup vertex V₃ is present on the TriSoup edge 716. The presence flag of a TriSoup edge 717 may indicate that a TriSoup vertex V₄ is present on the TriSoup edge 717. The presence flags of the remaining TriSoup edges each may indicate that a TriSoup vertex is not present on their corresponding TriSoup edge. The TriSoup node, corresponding to the occupied cuboid 700, may comprise a position for each TriSoup vertex present along one of its TriSoup edges 710-721. More specifically, the TriSoup node, corresponding to the occupied cuboid 700, may comprise a position p₁ for TriSoup vertex V₁, a position p₂ for TriSoup vertex V₂, a position p₃ for TriSoup vertex V₃, and a position p₄ for TriSoup vertex V₄. The TriSoup vertices may be shared among TriSoup nodes along common TriSoup edge(s).

A presence flag (sₖ) and, if the presence flag (sₖ) may indicate the presence of a vertex, a position (pₖ) of a current TriSoup edge may be entropy coded. The presence flag (sₖ) and position (pₖ) may be individually or collectively referred to as vertex information or TriSoup vertex information. A presence flag (sₖ) and, if the presence flag (sₖ) indicates the presence of a vertex, a position (pₖ) of a current TriSoup edge may be entropy coded, for example, based on already-coded presence flags and positions, of present TriSoup vertices, of TriSoup edges that neighbor the current TriSoup edge. A presence flag (sₖ) and, if the presence flag (sₖ) may indicate the presence of a vertex, a position (pₖ) of a current TriSoup edge (e.g., indicating a position of the vertex the edge is along) may be additionally or alternatively entropy coded. The presence flag (*sₖ*) and the position (*pₖ*) of a current TriSoup edge may be additionally or alternatively entropy coded, for example, based on occupancies of cuboids that neighbor the current TriSoup edge. Similar to the entropy coding of the occupancy bits of the occupancy tree, a configuration β_{TS} for a neighborhood (also referred to as a neighborhood configuration β_{TS}) of a current TriSoup edge may be obtained and dynamically reduced into a reduced configuration β_{TS}' = DRⁿ(β_{TS}), for example, by using a dynamic OBUF scheme for TriSoup. A context index LUT[β_{TS}'] may be obtained from the OBUF LUT. At least a part of the vertex information of the current TriSoup edge may be entropy coded using the context (e.g., probability model) pointed to by the context index.

The TriSoup vertex position (pₖ) (if present) along its TriSoup edge may be binarized. The TriSoup vertex position (pₖ) (if present) along its TriSoup edge may be binarized, for example, to use a binary entropy coder to entropy code at least part of the vertex information of the current TriSoup edge. A number (e.g., quantity) of bits N_{b} may be set for the quantization of the TriSoup vertex position (pₖ) along the TriSoup edge of length N. The TriSoup edge of length N may be uniformly divided into 2^{Nb} quantization intervals. By doing so, the TriSoup vertex position (pₖ) may be represented by N_{b} bits (pₖ^{j}, j=1, ..., N_{b}) that may be individually coded by the dynamic OBUF scheme as well as the bit corresponding to the presence flag (sₖ). The neighborhood configuration β_{TS}, the OBUF reduction function DR", and the context index may depend on the nature, characteristic, and/or property of the coded bit (e.g., a presence flag (sₖ), a highest position bit (pₖ₁), a second highest position bit (pₖ₂), etc.) of the coded bit (e.g., presence flag (sₖ), highest position bit (pₖ¹), second highest position bit (pₖ²), etc.). There may practically be several dynamic OBUF schemes, each dedicated to a specific bit of information (e.g., presence flag (sₖ) or position bit (pₖ^{j})) of the vertex information.

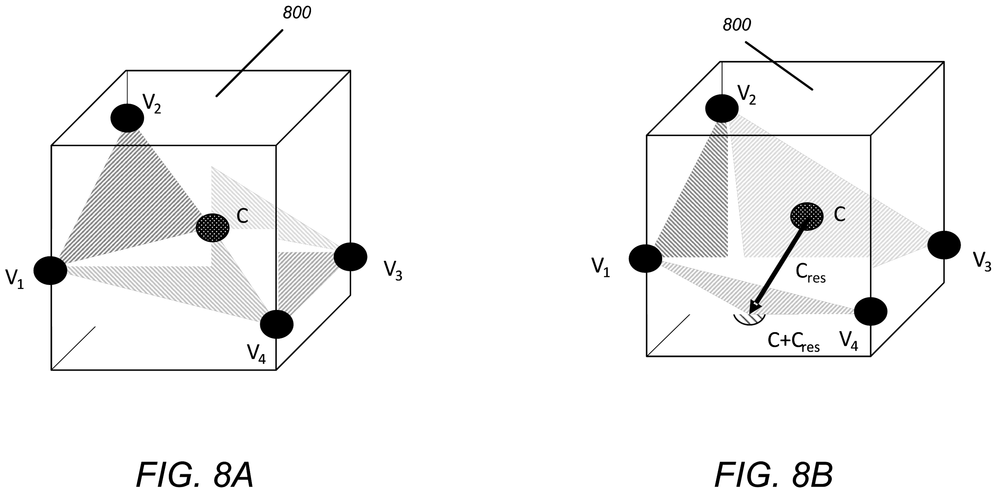

FIG. 8A shows an example cuboid 800 (e.g., a cube) corresponding to a TriSoup node. A cuboid 800 may correspond to a TriSoup node with a number (or quantity) K of TriSoup vertices Vₖ. Within cuboid 800, TriSoup triangles may be constructed from the TriSoup vertices Vₖ. TriSoup triangles may be constructed from the TriSoup vertices Vₖ, for example, if at least three (K≥3) TriSoup vertices are present on the TriSoup edges of cuboid 800. For example, with respect to FIG. 8A, four TriSoup vertices may be present and TriSoup triangles may be constructed. The TriSoup triangles may be constructed around the centroid vertex C defined as the mean of the TriSoup vertices Vₖ. A dominant direction may be determined, then vertices Vₖ may be ordered by turning around this direction, and the following K TriSoup triangles (listed as triples of vertices) may be constructed: V₁V₂C, V₂V₃C, ..., V_{K}V₁C. The dominant direction may be chosen among the three directions respectively parallel to the axes of the 3D space to increase or maximize the 2D surface of the triangles, for example, if the triangles are projected along the dominant direction. By doing so, the dominant direction may be somewhat perpendicular to a local surface defined by the points of the point cloud belonging to the TriSoup node.

FIG. 8B shows an example refinement to the TriSoup model. The TriSoup model may be refined by coding a centroid residual value. A centroid residual value Cᵣₑₛ may be coded into the bitstream. A centroid residual value Cᵣₑₛ may be coded into the bitstream, for example, to use C+Cᵣₑₛ instead of C as a pivoting vertex for the triangles. By using *C+Cᵣₑₛ* as the pivoting vertex for the triangles, the vertex C+Cᵣₑₛ may be closer to the points of the point cloud than the centroid C, the reconstruction error may be lowered, leading to lower distortion at the cost of a small increase in bitrate needed for coding Cᵣₑₛ.

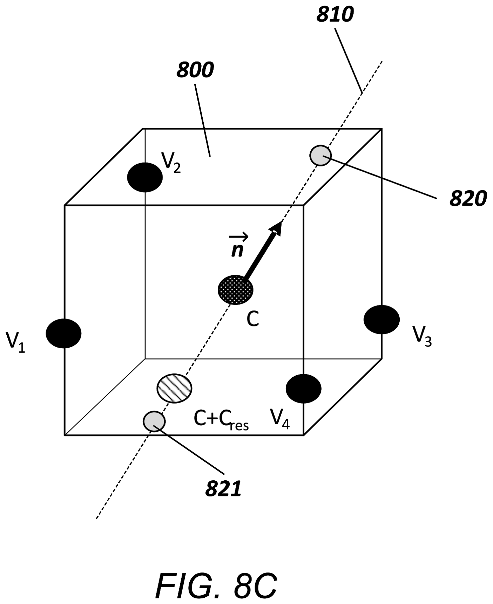

FIG. 8C shows an example of encoding a centroid residual value. An encoder may encode, for example, a centroid residual value *Cᵣₑₛ* into a bitstream. An adjusted centroid *C+Cᵣₑₛ* may be used instead of the centroid C for generating TriSoup triangles of a cuboid 800 (corresponding to a TriSoup node), for example, corresponding to a portion of a point cloud. The triangles may be generated based on the adjusted centroid *C+Cᵣₑₛ* and adjacent pairs of vertices of an ordering of the vertices V₁-V₄ (e.g., as described in FIG. 8A). The TriSoup triangles of the cuboid 800 may be voxelized (e.g., at the decoder), for example, to generate voxels representing (or modeling) the portion, of the point cloud, corresponding to the cuboid 800. The adjusted centroid *C+Cᵣₑₛ* may be used instead of the centroid C, for example, as a pivoting vertex for the triangles. A unitary vector *̅n̅*̅ (e.g., also referred to as a unit vector or as a normalized vector) may be determined as a (normalized) mean and/or as a normalization of normal vectors to the triangles (*V*₁*V*₂*C*, *V*₂*V*₃*C*, ..., *V_{K}V*₁*C*). The triangles (*V*₁*V*₂*C, V*₂*V*₃*C*, *..., V_{K}V*₁*C*) may be constructed by centroid C and pairs of the vertices of the cuboid 800, for example, by pivoting around the centroid C (e.g., as described in FIG. 8A). The unit vector *̅n̅*̅ may be the normalized vector of the following mean of cross-products (e.g., representing areas of the triangles): (*̅V̅*̅₁̅*̅C̅*̅ × *̅V̅*̅₂̅*̅C̅*̅ + *̅V̅*̅₂̅*̅C̅*̅ × *̅V̅*̅₁̅*̅C̅*̅ + ··· + *̅V̅_̅{̅K̅}̅C̅*̅ × *̅V̅*̅₁̅*̅C̅*̅)/*K.* The unit vector *̅n̅*̅ may be determined by dividing the mean vector (n) by the norm (or length) of the mean vector (i.e., *̅n̅*̅ = n / ∥n∥).

A value resulting from each cross product is equal to an area of a parallelogram formed by the two vectors in the cross product. Therefore, the value may be representative of an area of a triangle formed by the two vectors because the area of the triangle is equal to half of the value. The unit vector *̅n̅*̅ may be indicative of the direction normal to a local surface that is represented by the point cloud, for example, since the unit vector *̅n̅*̅ indicates a direction of the triangles (e.g., TriSoup triangles) representing (e.g., modeling) the portion of the point cloud. A one-component residual αᵣₑₛ along the line (C, *̅n̅*̅) 810 may be coded (e.g., encoded) instead of a 3D centroid residual value *Cᵣₑₛ*, for example, to increase (e.g., maximize) the effect of the centroid residual value *Cᵣₑₛ* and/or to decrease (e.g., minimize) its coding cost. The 3D centroid residual value *Cᵣₑₛ* may be, for example, the one-component residual αᵣₑₛ multiplied by the unitary vector *̅n̅*̅ (e.g., *Cᵣₑₛ* = *αᵣₑₛn̅*).

The encoder may determine the residual value αᵣₑₛ. The encoder may determine the residual value of αᵣₑₛ, for example, as the intersection between the current point cloud and the line (C, *̅n̅*̅), which is along the same direction of the normalized vector *̅n̅*̅. A set of points, of the portion of the point cloud, closest (e.g., within a threshold distance and/or a threshold number of/quantity of points) to the line may be determined. The set of points may be projected on the line and the residual value αᵣₑₛ may be the mean component along the line of the projected points. The mean may be a weighted mean, for example, whose weights may depend on a distance of the set of points from the line. A point from the set closer to the line may, for example, have a higher weight than another point from the set farther from the line.

The residual value αᵣₑₛ may be quantized. The residual value αᵣₑₛ may be quantized, for example, by a uniform quantization function that may have a quantization step similar to the quantization precision of the TriSoup vertices Vₖ. The quantization error may be uniform over all vertices Vₖ and/or *C+Cᵣₑₛ* such that the local surface may be uniformly approximated.

The residual value αᵣₑₛ may be binarized and/or coded (e.g., entropy coded) into the bitstream. The residual value αᵣₑₛ may be binarized and/or coded (e.g., entropy coded) into the bitstream, for example, by using a typical unary-based (coding) scheme. The residual value αᵣₑₛ may be coded, for example, using a set of flags. A flag f₀ may be coded, for example, to indicate if the residual value αᵣₑₛ is equal to zero. If the flag f₀ indicates the residual value αᵣₑₛ is zero, no further syntax elements may be needed. If αᵣₑₛ is not equal to zero, a sign bit may be coded and/or the residual magnitude |αᵣₑₛ|-1 may be coded using an entropy code. The residual magnitude may be coded, for example, using a unary scheme that may code successive flags fᵢ (i≥1) indicating if the residual value magnitude |αᵣₑₛ| is equal to 'i'. A binary entropy coder may binarize the residual value αᵣₑₛ into the flags fᵢ (i≥0). A binary entropy coder may entropy code the binarized residual value and/or the sign bit.

Compression of the residual value αᵣₑₛ may be improved. Compression of the residual value αᵣₑₛ may be improved, for example, by determining bounds as shown in FIG. 8C. The line (C, *̅n̅*̅) 810 may intersect the current cuboid 800 (corresponding to a TriSoup node) at two bounding points 820 and 821. The encoder may ensure that the point *C+Cᵣₑₛ* (e.g., the adjusted centroid vertex) is located between the two bounding points 820 and 821. By ensuring that the point *C+Cₑₛ* is located between the two bounding points 820 and 821, this implies bounds on the (quantized) residual value αᵣₑₛ such that the (quantized) residual value αᵣₑₛ may belong to an integral interval [*m, M*], where *m* ≤ 0 ≤ *M.* Some bits of the binarized residual value αᵣₑₛ may be inferred. Aᵣₑₛ may be necessarily equal to zero, for example, if *m=M=0.* The sign bit may be necessarily positive, for example, if *m=0<M.* The magnitude of the residual value |αᵣₑₛ| may be bounded by either |*m*| or *M* such that the magnitude may be coded by a truncated unary (coding) scheme that may infer the value of the last of successive flags fᵢ (i≥1), for example, if the residual value αᵣₑₛ is not equal to zero and its sign is known.

The coder (e.g., the binary entropy coder) used to code the binarized residual value αᵣₑₛ may be a context-adaptive binary arithmetic coder (CABAC). The probability model (or context or entropy coder) used to code at least one bit (fᵢ or sign bit) of the binarized residual value αᵣₑₛ may be updated, for example, depending on the value of the at least one bit (fᵢ or sign bit) of the binarized residual value αᵣₑₛ. The probability model of the coder (e.g., the binary entropy coder) may be determined, for example, based on contextual information. The contextual information may comprise the values of the bounds m and M, the location of vertices Vₖ, and/or the size of the TriSoup node (e.g., the cuboid 800). The selection of the coder (or the selection of the probability model of the coder) may be performed by a dynamic OBUF scheme that may use the contextual information described herein as entry (e.g., inputs).

The reconstruction of a decoded point cloud from a set of TriSoup triangles may be referred to as "voxelization" and may be performed, for example, by ray tracing or rasterization, for each triangle individually before duplicate voxels from the voxelized triangles are removed.

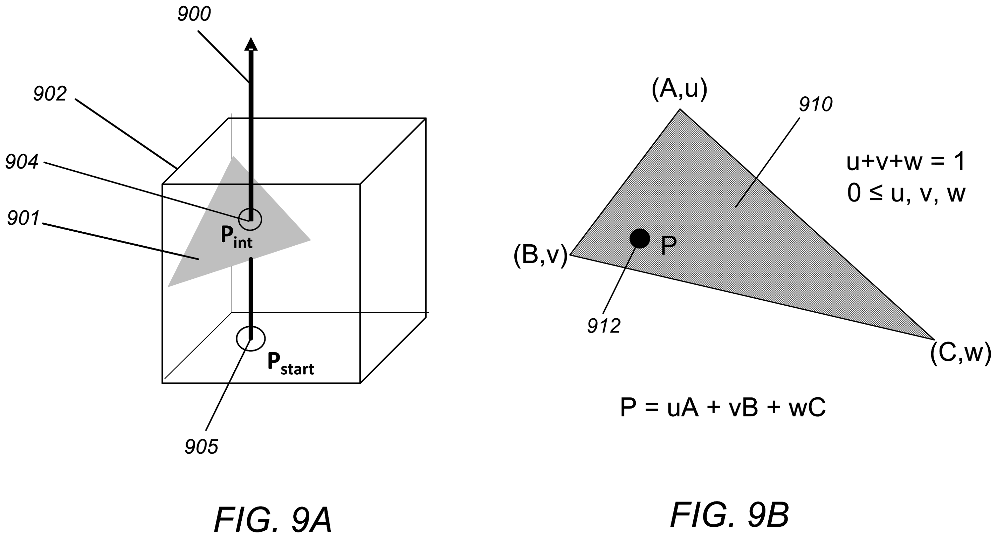

FIG. 9A shows an example of voxelization using ray tracing. Ray-triangle intersection algorithms, such as the Möller-Trumbore algorithm, may take advantage of launching rays, for example, to determine whether rays intersect with TriSoup triangles and if so, at what points of the TriSoup triangles. Rays may be launched from integral coordinates that correspond to the centers of voxels. As shown in FIG. 9A, rays, for example, ray 900 may be launched substantially parallel to one of the three coordinate axes of the 3D space, starting from integral coordinates (sometimes referred to as integer coordinates) such as an origin point 905 (shown as origin or starting point Pₛₜₐᵣₜ in FIG. 9A).

An intersection point 904 (shown as Pᵢₙₜ in FIG. 9A), if any, between ray 900 and a TriSoup triangle 901 belonging to a cube 902, corresponding to a TriSoup node, may be rounded (or, e.g., quantized) to obtain a decoded point corresponding to a voxel. A ray, for example, launched substantially parallel to a coordinate axis in 3D space, may intersect a TriSoup triangle. The ray may intersect the TriSoup triangle, for example, if and only if the projection, along the ray direction, of the center of a voxel belongs to the TriSoup triangle. In other words, the ray may be determined to intersect the TriSoup triangle if the point of intersection corresponds to the center of the voxel. This intersection may be determined, for example, by using a ray-triangle intersection algorithm (e.g., tracing or ray casting technique) such as the Möller-Trumbore algorithm to generate voxels representing the triangle.

Ray tracing techniques such as the Möller-Trumbore algorithm is based on generating, with respect to a triangle, barycentric coordinates of points of intersection between rays and a plane of the triangle. Then, points of the triangle may be determined from the barycentric coordinates.

FIG. 9B shows an example of voxelization using barycentric coordinates. More particularly, FIG. 9B shows an example of voxelization using barycentric coordinates (u, v, w) of a point 912 (P) relative to a TriSoup triangle 910 having vertices labeled A, B, and C in the 3D space. Point 912 may be determined as an intersection between a ray and a plane of TriSoup triangle 910 (e.g., containing or passing through the three vertices A, B, and C of TriSoup triangle 910). The ray may be launched, for example, substantially parallel to one of the three coordinate axes in 3D space. In some examples, this intersection point 912 may be uniquely represented as a sum of the three vertices of TriSoup triangle 910: $P = uA + vB + wC$ under the condition u + v + w = 1. Therefore, any point P of the plane (containing TriSoup triangle 910) has unique coordinates (u,v,w) in the barycentric coordinate system. A point with barycentric coordinates (u,v,w) may include an ordered triple of quantities/numbers u, v, and w. A point with barycentric coordinates (u,v,w) that sum to 1 (e.g., u + v + w = 1) may be referred to as homogeneous barycentric coordinates and/or normalized barycentric coordinates. The barycentric coordinates of the intersection point with respect to TriSoup triangle 910 may be determined using algorithms, for example, the Möller-Trumbore algorithm.

By converting points with Cartesian coordinates in 3D space to homogeneous barycentric coordinates, the three vertices A, B, C of TriSoup triangle 910 may comprise respective barycentric coordinates A(1,0,0), B(0,1,0) and C(0,0,1). The convex hull (e.g., the TriSoup triangle 910) of the three vertices A, B, and C may be equal to the set of all points such that the barycentric coordinates u, v, and w is each greater than or equal to zero: $0 \leq u , v , w$

Therefore, the intersection point may be determined to belong to TriSoup triangle 910, for example, based on the intersection point having barycentric coordinates with an ordered triple of values that are each greater than or equal to zero. Relatedly, if at least one of barycentric coordinates (i.e., one of u, v, or w) is negative or less than 0, then the intersection point may be determined to not belong to TriSoup triangle because it will be on the plane, but not on an edge or within the TriSoup triangle. A point determined to belong to TriSoup triangle 910 may be the ray intersecting TriSoup triangle 910 (e.g., within or at an edge of TriSoup triangle 910).

Presence flags (sₖ) and vertex positions (pₖ) of TriSoup vertices may be efficiently entropy coded using neighboring information and the occupancy of neighboring leaf nodes. The neighboring information may be included in neighboring already-coded TriSoup edges (e.g., already-coded flags and positions of TriSoup vertices). Specifically, a presence flag (sₖ) and, if the presence flag (sₖ) indicates the presence of a vertex, a position (pₖ) of the vertex along a current TriSoup edge may be entropy coded based on already-coded presence flags and positions (of present TriSoup vertices) of TriSoup edges, for example, that neighbor the current TriSoup edge. A presence flag (sₖ) and, if the presence flag (sₖ) indicates the presence of a vertex, a position (pₖ) on (e.g., indicating a position of the vertex along) a current TriSoup edge may be additionally or alternatively entropy coded based on occupancies of cuboids, for example, that neighbor the current TriSoup edge. The presence flag (sₖ) and position (pₖ) may be individually or collectively referred to as vertex information. Similar to the coding of the occupancy bits (e.g., binary information) of the occupancy tree, a TriSoup neighborhood configuration β_{TS} may be obtained and dynamically reduced into a reduced configuration β_{TS}' = DRⁿ(β_{TS}) by using a dynamic OBUF scheme dedicated to TriSoup. A coder index LUT[β_{TS}'] may be obtained from the OBUF Look-Up table and at least a part of the TriSoup data (e.g., vertex information of the current TriSoup edge) may be coded, for example, using a binary entropy coder (also referred to as probability model or context) pointed to by the coder index.

In order to use a binary entropy coder, a TriSoup vertex position (pₖ) along its TriSoup edge may be binarized. Typically, a quantity of bits (Nb) may be set for a quantization of the position along the TriSoup edge of length N that may be uniformly divided into 2Nb quantization intervals. By doing so, vertex position (pₖ) may be represented by Nb bits (pkj, j=1, ..., Nb)) that may be individually coded by the dynamic OBUF scheme as well as the bit corresponding to the presence flag (sk). The neighborhood information βTS, the OFUF reduction function DRn and thus the coder index does depend on the nature of the coded bit (e.g., presence flag (sk), highest position bit (pk1), second highest position bit (pk2), etc.). Practically, there are several dynamic OBUF schemes, each of them being dedicated a specific TriSoup bit of information (e.g., presence flag (sk) or position bit (pkj)). A neighborhood information βTS of a current TriSoup edge may be obtained from occupancy bits of a neighboring (e.g., relative to the current TriSoup edge) leaf nodes and from the vertex presence (sk') and position (pk') associated with neighboring (relative to the current TriSoup edge) already-coded TriSoup edges.

Positions of TriSoup vertices along edges of TriSoup nodes may be quantized before being coded. Quantization of the positions of TriSoup vertices to a restricted quantity/number of possible positions along TriSoup edges may lead to a lower bitrate of coding of the positions with a drawback of higher distortion between the TriSoup model made of triangles based on the TriSoup vertices and the original point cloud geometry. Nevertheless, quantization of the positions of TriSoup vertices often leads to an improved tradeoff bitrate vs. distortion and better compression capabilities. The TriSoup scheme (e.g., as defined for example in GPCCv2 and GeS-TM under development in MPEG SC29/WG7) may have limited quantization capabilities that impose that the size B of a leaf node as well as the size of the quantization steps used for quantizing the positions of TriSoup vertices along TriSoup edges may both be powers of two.

Throughout the descriptions herein, various intervals are represented using mathematical notation such that a closed interval between endpoints a and b is represented as [a,b], a left-closed and right-open interval is represented as [a,b[, a left-open and right-closed interval is represented as ]a,b], and an open interval is represented as ]a,b[. It should be understood that the notation for exclusion such as ]a and b[ are equivalent to the equivalent notation of parentheses () representing exclusion. For example, ]a,b[ is the same as (a,b) including both a and b are excluded.

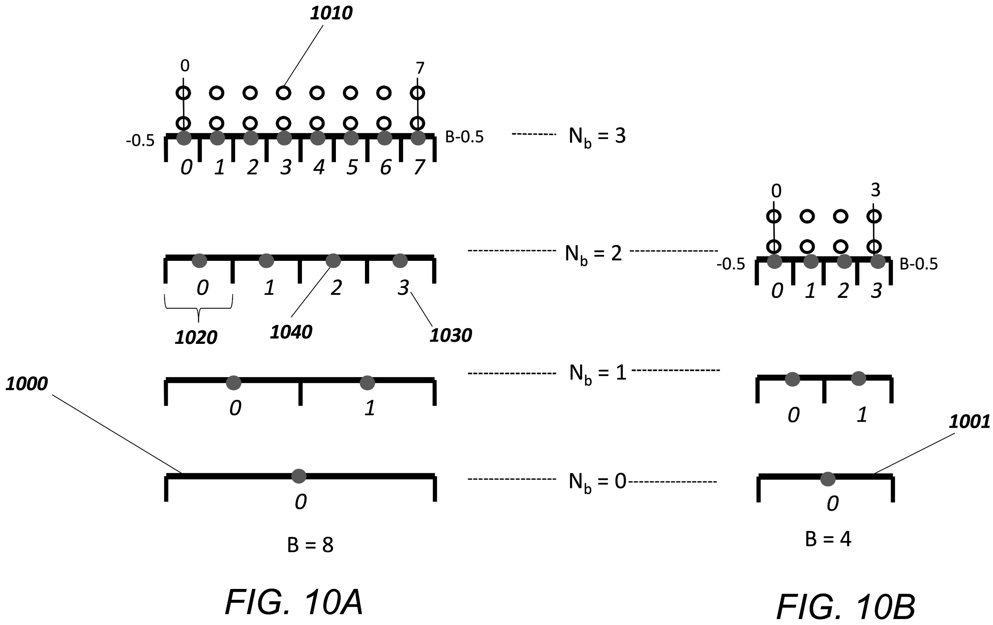

FIGS. 10A-B show examples of a quantizer. Specifically, FIGS. 10A-10B, shows an example of a quantizer having a leaf node size B as well as a size of the quantization steps, where both are powers of two. FIG. 10A shows edges 1000 of length B=8 belonging to TriSoup nodes of size 8x8x8. FIG. 10B shows edges 1001 of length B=4 belonging to TriSoup nodes of size 4x4x4. A parameter N_{b} may signal the quantity/number of quantization bits allowed for signaling the quantized positions of the TriSoup vertices along edges. Quantization may be uniform over edges and quantization steps cannot be smaller than a voxel. Consequently, for TriSoup nodes having size B=2^{N}, the quantity/number N_{b} of quantization bits must be smaller than N. FIG. 10A shows the quantization process for N_{b} = 3, 2, 1 and 0 if B=8; and FIG. 10B shows the quantization process for N_{b} = 2, 1 and 0 if B=4.

Edges may be represented by segments [-0.5, B-0.5]. Points 1010 (white circles) of the point cloud geometry may be defined to have integral coordinates (xV,yV,zV) and may be associated with 3D voxels being cubes of size 1x1x1 centered at (xV,yV,zV).. The edges (1000, 1001) may be divided uniformly into a quantity/number 2Nb of quantization intervals 1020 each of same length 2N-Nb for Nb ≤ N. The quantization intervals may be associated with codewords 1030 belonging to the set {0; ...; 2Nb -1}. The vertex position (pₖ) of a TriSoup vertex along an edge (k) (e.g., 1000 or 1001) may have a value in the segment [-0.5, B-0.5] that may be quantized into a codeword pk,Nb associated with the quantization interval that this value may belong to. Dequantized positions 1040 (gray dots) obtained from codewords pk,Nb may be the middle of the quantization interval associated with the codewords pk,Nb. TriSoup vertex information of a Trisoup vertex along the current edge (k) may be made of the (decoded) presence flag (sk) of the TriSoup edge (k) and the dequantized position (p_{DQ,k}) of TriSoup vertex on the TriSoup edge (k).

It has been proposed to obtain better granularity for TriSoup node size B and for quantization of vertex positions over TriSoup edges by introducing a particular quantization process for the TriSoup edges. This particular quantization process may handle any length of edges (and thus allows for any size B of TriSoup node) and uniform quantization by intervals of any length.

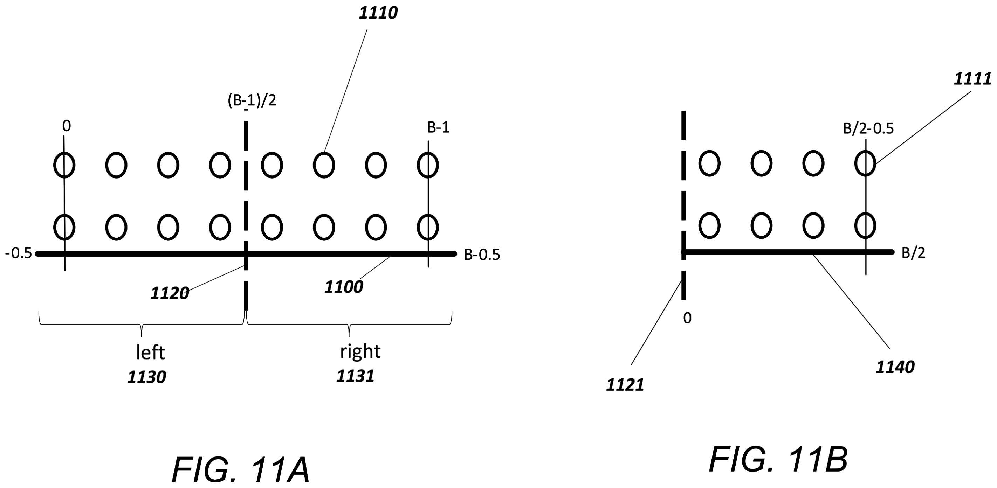

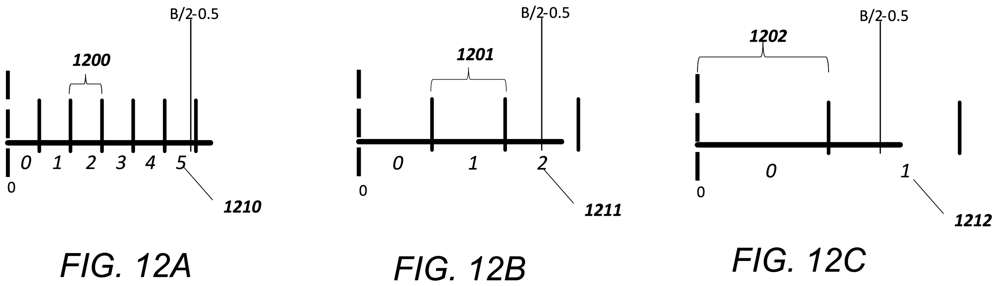

FIGS. 11A-B and FIGS. 12A-C show examples of a quantizing process. Specifically, FIGS. 11A-B and FIGS. 12A-C show examples of a quantizing process, but more specifically FIGS. 12A-C show examples of quantizing the distance (dₚ). FIG. 11A shows an edge (k) that is represented by a thick line 1100. The edge (k) in the example shown in FIG. 11A has length B that may be any integral quantity/number and not necessarily a power of two. Without loss of generality, it may be presumed that the edge (k) is a segment [-0.5; B-0.5] along the coordinate axis parallel to the edge (k). Points 1110 of the point cloud in a TriSoup node that neighbors the edge (k),line 1100, may have integral coordinates between 0 and B-1 along the axis. Points in the TriSoup node may belong to the grid {0; ...; B-1}3 within the cube [-0.5; B-0.5]3 and may define the volume of the TriSoup node, for example, with respect to cubic TriSoup nodes. The middle position 1120 of the edge (k), line 1100, has coordinate (B-1)/2 in the segment [-0.5; B-0.5] defining the edge (k). The edge (k), line 1100, may thus be split into two equal parts: a left half edge 1130 and a right half edge 1131. The left half edge 1130 may be defined by the segment [-0.5; B/2-0.5[ starting from the lower bound (-0,5) of the edge (k), line 1100, and ending at the middle position (B/2-0,5) of the edge (k), line 1100. The right half edge 1131 may be defined by the segment [B/2-0.5; B-0.5] starting from the middle position (B/2-0.5) of the edge (k), line 1100, and ending at the upper bound (B-0.5) of the edge (k), line 1100.

A TriSoup vertex located on the edge (k), line 1100, may have vertex position (pₖ) in the segment [-0.5; B-0.5]. Quantizing the vertex position (pₖ) of TriSoup vertex as described herein may first involve determining if a vertex position (pₖ) of the TriSoup vertex may be on a first half or a second half of a current edge (k). The bit (blr,k) may indicate if the TriSoup vertex position (pₖ) may belong to either the left half edge 1130 (for example, blr,k = 0) or the right half edge 1131 (for example, blr,k = 1). Second, quantizing the vertex position (pₖ) of TriSoup vertex as described herein may involve a distance (dₚ) being determined between middle position 1121 of the edge (k), line 1100, as shown in FIG. 11B and the vertex position (pₖ) of the TriSoup vertex and the distance (dₚ) may be quantized as shown in FIGS. 12A-C.

FIG. 11B shows a distance (dₚ) may belong to an interval of definition defined as a segment [0; B/2] shown by a thick line 1140. The lower bound 0 may represent the middle position 1121 of the edge. The distance (dₚ) may be determined, for example, as the absolute difference between the middle position 1121 of the current edge (k) and the vertex position (pₖ) of the TriSoup vertex: ${d}_{p} = \left|{p}_{k}-\left(B-1\right)/2\right|$

Presuming the vertex position (pₖ) of the TriSoup vertex has been determined by points of the point cloud belonging to TriSoup nodes intersecting entirely the edge (k), line 1100, the distance (dₚ) may not be higher than B/2-0.5, corresponding to the farthest points 1111 from the middle position 1121 of the edge (k).

FIGS. 12A-C show examples of quantizing the distance (dₚ). and FIGS. 12A-C show examples of a quantizing process for any TriSoup node size B and/or any length of the quantization step. The distance (dₚ) may be quantized for three examples of quantization step Qs 1200 of FIG. 12A, 1201 of FIG. 12B, and 1202 of FIG. 12C. Segment [0; B/2] over which the distance (dₚ) may be uniformly partitioned into quantization intervals, for example, starting from its lower bound 0 until a last interval of quantization 1210 of FIG. 12A, 1211 of FIG. 12B, and 1212 of FIG. 12C containing the upper bound B/2-0.5. The distance (dₚ) between the middle position of the current edge (shown as 0 with the dotted lines) and the vertex position (pₖ) of the TriSoup vertex may then be quantized into Ns quantization intervals [0, Qs[, [Qs, 2Qs[, ..., [(Ns-1)Qs, NsQs[. A codeword may be associated with each interval [kQs, (k+1)Qs[. Codeword Cp,k may indicate a distance (dₚ) from a middle position of the current edge (k) and a vertex position (pₖ) of the TriSoup vertex that may be associated with the quantization interval the distance (dₚ) may belong to. The distance (dₚ) may be quantized into the codeword Cp,k associated with the quantization interval the distance (dₚ) may belongs to. The quantity/number (Ns) of possible codewords may be determined as a unique integer that may fulfill the equalities (Ns-1)Qs ≤ dₚ < NsQs. The vertex position (pₖ) of the TriSoup vertex belonging to a TriSoup edge may be quantized into a bit blr,k and a codeword Cp,k for a given quantization step Qs.

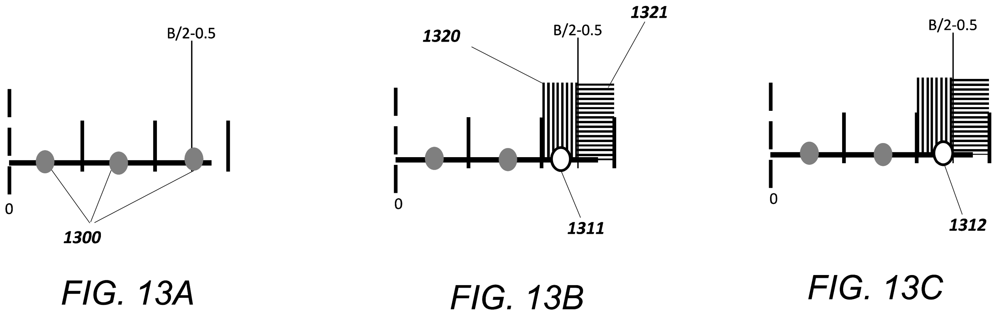

FIGS. 13A-C show examples of dequantizing distances. Specifically, FIGS. 13A-C show examples of dequantizing distances determined between the middle position of the current edge and the centers of quantization intervals. FIG. 13A shows an example of dequantizing distances dDQ,k as the centers of the quantization intervals such that: ${d}_{DQ , k} \left({C}_{p , k}, {Q}_{s}\right) = \left({C}_{p , k}+0.5\right) {Q}_{s}$

Dequantized position (p_{DQ,k}) of a TriSoup vertex may be determined. Dequantized position (p_{DQ,k}) of a TriSoup vertex may be determined, for example, if a dequantization distance (d_{DQ,k}) is obtained. The dequantized position (p_{DQ,k}) of a TriSoup vertex may be determined by the formula: ${p}_{DQ , k} = \left(B-1\right) / 2 - {d}_{DQ , k} if {b}_{lr , k} = 0 ,$ ${p}_{DQ , k} = \left(B-1\right) / 2 + {d}_{DQ , k} if {b}_{lr , k} = 1 .$ Determining a dequantization distance (d_{DQ,k}) that may be associated with a last quantization interval [(Nₛ-1)Qₛ, NₛQₛ[ may be based on a center of a last interval may not be optimal, for example, as shown in FIG. 13B. The distance (dₚ) may only belong to the subinterval 1320 (vertical stripes) at the left of the coordinate B/2 - 0.5 and not to the subinterval 1321 (horizontal stripes) at the right of the coordinate B/2 - 0.5. The dequantized distance (d_{DQ},ₖ) 1511 of the last quantization interval may thus belong to the left subinterval [(Ns-1) Qs, B/2 - 0.5]. A dequantized distance (d_{DQ,k}) 1311 of a last quantization interval may be a middle position of a left subinterval [(Nₛ-1) Qₛ, B/2 - 0.5], for example, : ${p}_{DQ , k} \left({N}_{s}-1,{Q}_{s}\right) = \left(\left({N}_{s}-1\right){Q}_{s}+B/2-0.5\right) / 2 .$

It has been observed from statistics on the positions of TriSoup vertices that the distribution of distances (dₚ) tends to peak near the bound B/2 - 0.5. Consequently, the dequantized distance (d_{DQ,k},) 1312 of FIG. 13C, of the last interval of quantization may be located at the right of the middle position of the left subinterval [(Nₛ-1) Qₛ, B/2 - 0.5]. Dequantized distance (d_{DQ,k}) 1312 may be obtained. Dequantized distance (d_{DQ,k}) 1312 may be obtained, for example, by: ${d}_{DQ , k} \left({N}_{s}-1,{Q}_{s}\right) = \left(\left({N}_{s}-1\right){Q}_{s}+3*\left(B/2-0.5\right)\right) / 4 .$

Quantization step (Qₛ) may have sub-voxel precision such that the quantization step (Qₛ) may not necessarily be a multiple of a voxel. Sub-voxel precision facilitates fine adjusting of a local quality and/or a rate allocation for a point cloud geometry. The quantization step (Qₛ) may be represented by an integer value IQs with a fixed quantity/number M of precision (e.g. 8 bits), for example, such that the quantization step (Qₛ) is equal to IQs /2M. Internal computation of the quantizing and de-quantizing processes may be performed using this M-bit precision. In particular, positions p_{DQ,k} may have M-bit precision and the TriSoup triangles may be constructed based on TriSoup vertices positions with M-bit precision. The voxelizing process of TriSoup triangles comes back to integer precision when obtaining the decoded points of the point cloud.

A geometry quality parameter (GQP), representative of values of the integer (IQs), may be provided, for example, by an end-user. The GQP may equal the integer (IQs). The GQP may mimic a well-known behavior of video quality parameters by having the quantization step Qs being proportional to a power of two of a scaled GQP. The following formula may be used for positive integral quality parameter GQP: ${Q}_{s} = {2}^{\left(GQP-12\right) / 6} \left(GQP\geq 0\right)$

A quantization step (Qₛ) may have a size of a quarter of a voxel, a half of a voxel, a voxel, or two voxels. A quantization step (Qₛ) may have a size of a quarter of a voxel, for example, if the GQP is equal to 0. The quantization step (Qₛ) may have a size of half a voxel, for example, if the GQP is equal to 6. The quantization step (Qₛ) may have the size of a voxel, for example, if the GQP is equal to 12. The quantization step (Qₛ) may have a size of two voxels, etc., for example, if the GQP is equal to 18. A change of one unit in the integral GQP may induces a change of the quantization step (Qₛ) of a factor 2^{1/6} ≈ 1.12 (e.g., equivalently a change of about 12%), much below the factor 2 of the prior art. This may allow for finer adjusting of the geometry quality.

A GQP may be signaled in the bitstream to signal, to the decoder, the size of the quantization step (Qₛ). A GQP may be signaled in the bitstream to signal to the decoder the size of the quantization step (Qₛ), for example. The GQP may be signaled in the high-level syntax of the bitstream. The GQP may be signaled in the high-level syntax of the bitstream, for example in the Geometry Parameter Set (GPS) or in the headers of the Geometry Data Units (GDU) (e.g., slices/slabs or bricks), for example. The GQP may be signaled at a more local level to allow for local quality adjustment. GQP may be signaled at a more local level to allow for local quality adjustment, for example. The value of the GQP may be signaled at TriSoup node level or in Quality Units that partition Geometry Data Units, for example.

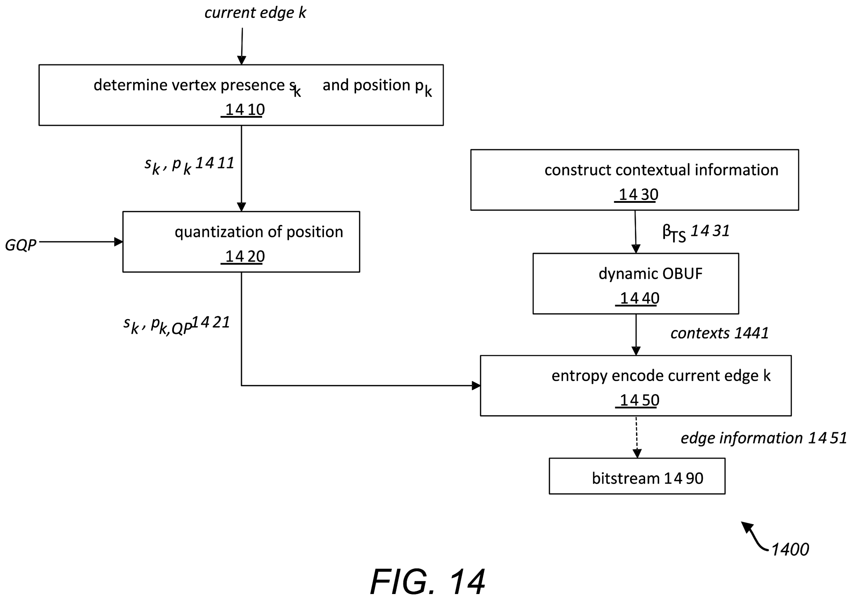

FIG. 14 shows an example of an encoding process. Specifically, FIG. 14 shows an example of an encoding process 1400 that may be used to encode the edge information of a current edge (k) of a TriSoup node into a bitstream 1490, for example, for the quantization processes described in relation with FIGS. 10-13 and based on a GQP. One or more steps of the encoding process 1400 may be performed by an encoder (e.g., encoder 114 as described herein with respect to FIG. 1). The edge information 1411 of the current edge (k) may comprise a presence flag (sₖ). The edge information 1411 may also comprise a vertex position (pₖ) along the current edge (k), for example, if the presence flag (sₖ) is true.

At step 1410, a presence flag (sₖ) may be determined. The presence flag (sₖ) may be determined, for example, based on a portion of the point cloud neighboring the current edge (k). A vertex position (pₖ) along the current TriSoup edge (k) may also be determined based on a portion of the point cloud neighboring the current edge (k), for example, if the presence flag (sₖ) is true.

At step 1420, the vertex position (pₖ) may be quantized into a quantized position information (p_{k,QP}) 1421. The quantized position information (p_{k,QP}) 1421 may comprise a flag (b_{lr,k}) and a codeword (C_{p,k}) that may be coded in the bitstream 1490. The quantization may be performed according to a quantization step (Qₛ) that may be determined based on a GQP.

At step 1430, a TriSoup contextual information (β_{TS}) 1431 may be constructed. The TriSoup contextual information (β_{TS}) 1431 may be constructed, for example, based on the presence flags (sₙₑᵢ) and quantized positions (pₙₑᵢ) of already-coded neighboring edges of the current edge (k). At step 1440, a dynamic OBUF process may select probability models (e.g., contexts 1441) based on TriSoup contextual information (β_{TS}) 1431.

At step 1450, the bits representing the presence flag (sₖ), the flag (b_{lr,k}) and the quantized position information (p_{k,QP}) 1421 (e.g., comprising a flag (b_{lr,k}) and a codeword (C_{p,k})) may be entropy encoded one by one based on the selected contexts 1441 as edge information 1451 in the bitstream 1490. The presence flag (sₖ) and the quantized position information (p_{k,QP}) 1421 of the current edge (k) may then be added to a set of already-coded edges before proceeding to a next current edge.

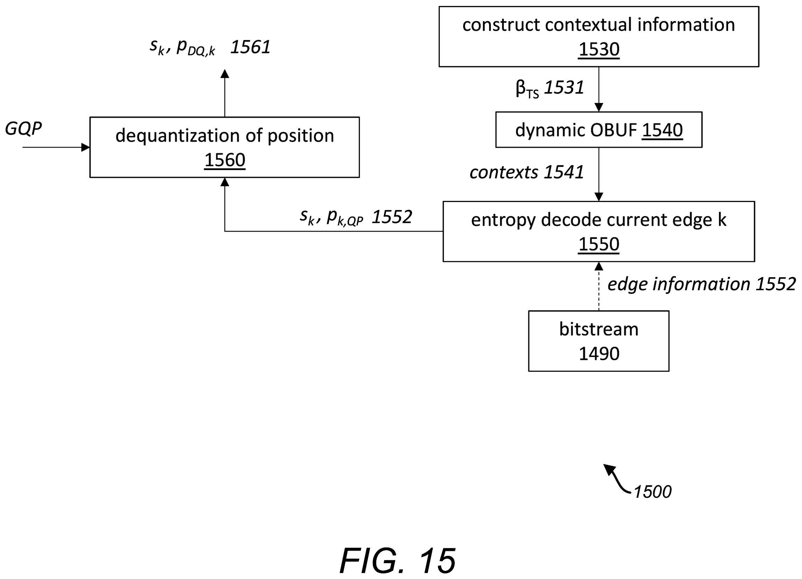

FIG. 15 shows an example of a decoding process. Specifically, FIG. 15 shows an example of a decoding process 1500 that decodes a current edge (k) of a TriSoup node from a bitstream 1490 for the quantization processes (e.g., as described herein with respect to FIGS. 10-13) and based on a GQP. One or more steps of process 1500 may be performed by a decoder (e.g., decoder 120 as described herein with respect to FIG. 1). The bitstream 1490 may be derived from the process 1400 of FIG. 14.

At step 1530, a TriSoup contextual information (β_{TS}) 1531 may be constructed. The TriSoup contextual information (β_{TS}) 1531 may be constructed, for example, based on the presence flags (sₙₑᵢ) and quantized positions (pₙₑᵢ) of already-coded neighboring edges of the current edge (k). At step 1540, a dynamic OBUF process may select probability models (e.g., contexts 1541). The dynamic OBUF process may select probability models (e.g., contexts 1541), for example, based on the TriSoup contextual information (β_{TS}) 1531.

At step 1550, edge information 1552 may be decoded from the bitstream 1490. Edge information 1552 may be decoded from the bitstream 1490, for example, based on the contexts 1541. Edge information 1552 may comprise the presence flag (sₖ) and the quantized position information (p_{k,QP}) (e.g., comprising a flag (b_{lr,k}) and a codeword (C_{p,k})) of the current edge (k). The bits that may represent the presence flag (sₖ) and the quantized position information (p_{k,QP}) may be decoded one by one.

At step 1560, the quantized position information (p_{k,QP}) (e.g., comprising a flag b_{lr,k} and a codeword C_{p,k}) may be dequantized to obtain the decoded dequantized position p_{DQ,k}. The output of step 1560 may be the decoded edge information 1561 of the current edge (k) and may comprise the presence flag (sₖ) and the decoded dequantized position p_{DQ,k}. The dequantization may be performed according to a quantization step Qₛ that may be determined based on a GQP. This parameter may be obtained (e.g., decoded) from the bitstream 1490. The presence flag (sₖ) and the quantized position information (p_{k,QP}) of the current edge (k) may then be added to a set of already-coded edges before proceeding to a next current edge.

A decoded point cloud may be obtained by constructing and voxelizing triangles obtained based on the TriSoup vertices associated with the decoded current edge information 1552. The bits representing the presence flag (sₖ), the flag b_{lr,k} and the codeword C_{p,k} may be coded by a dynamic OBUF process. Each of the bits may be coded according to a dedicated instance of dynamic OBUF with its own statistics.

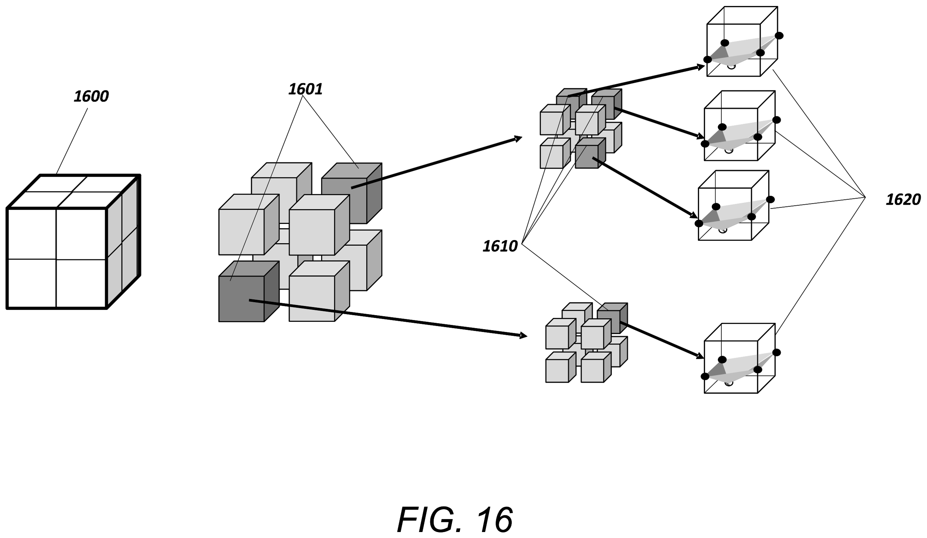

FIG. 16 shows an example of a geometry coding. Specifically, FIG. 16 show an example of geometry coding of a point cloud based on an occupancy tree and TriSoup coding scheme. Geometry coding of a point cloud may start from an initial volume 1600, also known as initial bounding box, iteratively split into smaller sub-volumes. Initial volume 1600 may contain/encompass the point cloud. Occupied sub-volumes (dark gray, 1601) may be split until reaching leaf sub-volumes having sizes corresponding to a TriSoup node size. Portions of the point cloud that may belong to occupied leaf sub-volumes 1610 may then be represented by voxelized TriSoup triangles 1620. The overall representation of the point cloud may be the combination (e.g., union) of portions of the point cloud represented by voxelized TriSoup triangles. Each of the portions may belong to a respective leaf sub-volume.

A motion compensated reference point cloud may be very similar (e.g., spatially) to a current point cloud to be encoded or decoded, for example, as a result of adding 3D local motion compensation for inter prediction of point cloud geometry. Instead of inter predicting and coding syntax elements (e.g. occupancy information of the occupancy tree, TriSoup vertices, etc.) representing the geometry, it may be more efficient to represent locally the geometry of a portion of the current point cloud by a copy of a portion of a reference (e.g., motion compensated) point cloud frame as described in *m43601:* [PCC] A new inter mode for geometry coding in TMC3, ISO/IEC JTC1/SC29/WG11, MPEG 123, S. Lasserre, D. Flynn, July 2018*.* This document describes that copying the inter predictor and skipping coding syntax elements associated with the portion may lead to massive compression. More recently, in *m71267:* [G-PCC][EE13.60 Test 1] Report on skip coding mode with Trisoup early termination, ISO/IEC JTC1/SC29/WG7, MPEG 149, W. Zhang and al., January 2025*,* the copy method of *m43601* has been extended to TriSoup and adopted in geometry-based solid/dense point cloud coding (GeSTM) as a geometry skip coding mode.

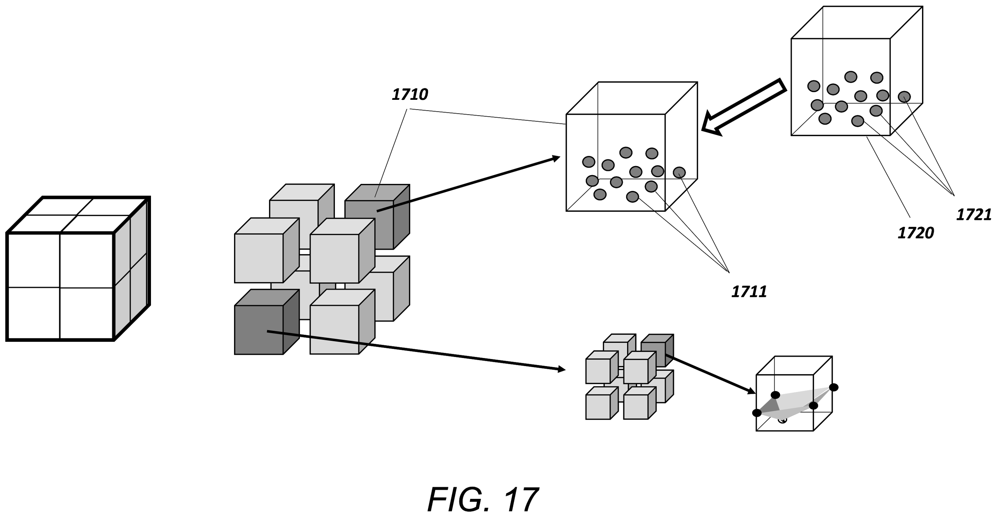

FIG. 17 shows an example of a skipped sub-volume. Specifically, FIG. 17 shows an example of a skipped sub-volume of the occupancy tree of FIG. 16. An occupancy tree may be early terminated at a sub-volume 1710, for example, signaled as being a skipped volume/node by a skip flag associated with the volume/node. Activation of the skip flag may be typically performed by the encoder based on a Rate Distortion Optimization (RDO) that that may compare the cost of geometry skipping (e.g., skip flag being set to true) against the cost of continuing the tree (e.g., skip flag being set to false). points 1721 belonging to a collocated, relative to the skipped sub-volume 1710, volume 1720 of a (motion compensated) reference point cloud frame are copied to the skipped sub-volume 1710 as copied points 1711, if geometry skipping is selected (e.g., set by the skip flag). The portion of point cloud in the skipped sub-volume 1710 may be represented by the copied points 1711. The continuation of encoding/decoding of the tree (and subsequent sub-volumes and TriSoup nodes) descendant of the skipped sub-volume 1710 may be performed based on the copied points 1711 without coding any occupancy information. This may reduce the size of the bitstream. Leaf nodes of the continuation of the tree may be occupied skipped leaf nodes or unoccupied skipped leaf nodes.

As a result of the geometry skip coding mode early termination, coded and skipped TriSoup nodes may coexist. In particular, a TriSoup edge, that may be shared by at most four leaf nodes, may be shared by a combination of unoccupied (non-skipped) leaf nodes, coded TriSoup nodes (e.g., corresponding to occupied non-skipped leaf nodes), occupied skipped leaf nodes, and unoccupied skipped leaf nodes.

Edge information (e.g., presence flag (sₖ), vertex position (pₖ)) of a TriSoup edge (k) may be needed in case this TriSoup edge may be shared by at least one coded TriSoup node because this TriSoup edge may be used for constructing TriSoup triangles in the at least one coded TriSoup node. Edge information may be systematically coded in the bitstream (e.g., as described herein with respect to steps 1450 of FIG. 14 and 1550 of FIG. 15). Edge information may be systematically coded in the bitstream, for example, before introducing the geometry skip coding mode.

Coding of the edge information may be avoided by using the copied points 1711 within the shared occupied skipped leaf node, for example, if a TriSoup edge (k) is shared by at least one occupied skipped leaf node. "Skipped edge information" may be obtained based on the copied points 1711 by determining the presence and, if present, the position of a TriSoup vertex on the TriSoup edge by using all copied points present in the at least one occupied skipped leaf nodes. The encoder and decoder may determine the "skipped edge information" based on copied points in shared occupied skipped leaf node using the same method an encoder would use (e.g., as described herein at step 1410 of FIG. 14) to determine edge information 1411 based on original points in all of at most four shared nodes. By doing so, edge information (e.g., presence flag (sₖ), vertex position (pₖ)) representing the TriSoup edge may not be coded in the bitstream, and the overall bitrate may be reduced. A TriSoup edge coded in this process is referenced herein as a skipped TriSoup edge. A TriSoup edge may be skipped as soon as there is at least one occupied skipped leaf node shared by the TriSoup edge. This may be independent of other shared nodes being non-occupied or coded or skipped.

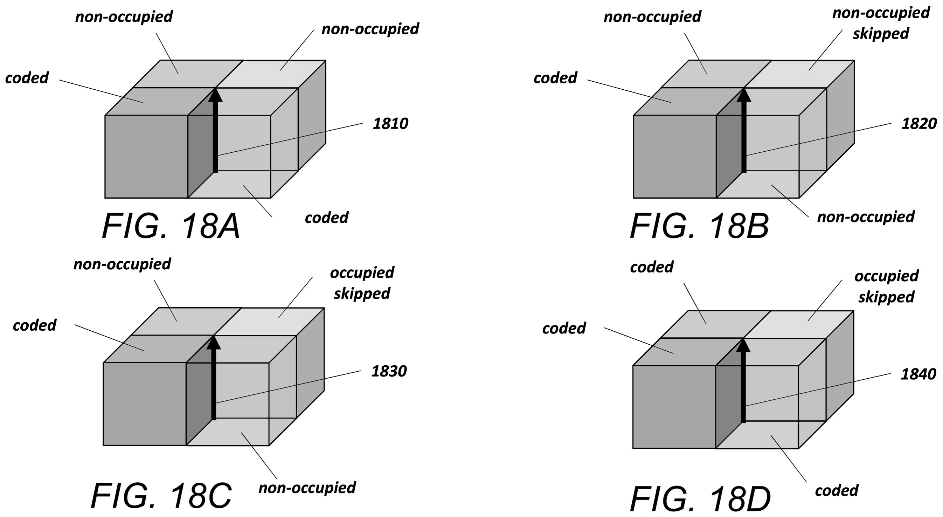

FIGS. 18A-D show examples of coded TriSoup edges. Specifically, FIGS. 18A-D show examples of coded TriSoup edges (e.g., edges 1810 and 1820) shared by leaf nodes (corresponding to respective leaf sub-volumes). FIG. 18A shows a TriSoup edge 1810 may be shared by two coded TriSoup nodes and two non-occupied leaf nodes. The TriSoup edge 1810 may not be a skipped TriSoup edge because none of the four nodes is an occupied skipped leaf node. FIG. 18B shows a TriSoup edge 1820 may be shared by a non-occupied leaf node, a coded TriSoup node, a non-occupied leaf node and a non-occupied skipped leaf node. The TriSoup edge 1820 may not be a skipped TriSoup edge because none of the four nodes is an occupied skipped leaf node. FIG. 18C shows the TriSoup edge 1830 may be shared by two non-occupied leaf nodes, a coded TriSoup node and an occupied skipped leaf node. TriSoup edge 1830 may be a skipped TriSoup edge, based on the TriSoup edge 1830 being an edge of an occupied skipped leaf node. FIG. 18D, TriSoup edge 1840 may be shared by three coded TriSoup nodes and an occupied skipped leaf node. The TriSoup edge 1840 may be a skipped TriSoup edge, based on the TriSoup edge 1840 being an edge of an occupied skipped leaf node.

The quantization (e.g., as described herein with respect to step 1420 of FIG. 14) of vertex positions (pₖ) belonging to skipped TriSoup edges may be the same as if the TriSoup edge was coded and not skipped, for example, the same GQP (e.g., as described herein in FIGS. 14 and 15) may be used for coded and skipped TriSoup edges.

Avoiding coding of TriSoup edges that may be shared by at least one occupied skipped leaf node may reduce the size of the bitstream, but may lead to reduced accuracy of the vertex positions on these skipped TriSoup edges (e.g., if vertices are present on these skipped TriSoup edges).

A vertex on the TriSoup edge may be determined based on the ground truth of an original point cloud such that the presence of a vertex and the position of the vertex (if present) may be the closest possible to the original point cloud. However, a vertex on a skipped TriSoup edge may be determined based on copied points in occupied skipped leaf node. These copied points may not reflect exactly the points of the original point cloud. Additionally, as shown in the examples described herein with respect to FIG. 18C and FIG. 18D, occupied skipped leaf nodes may be a strict subset of leaf nodes that share the skipped TriSoup edge. The occupied skipped leaf nodes may be a strict subset of leaf nodes that share the skipped TriSoup edge such that the vertex on the skipped TriSoup edge may be determined based only on a subset of leaf nodes that may share the TriSoup edge. FIG. 18D shows an extreme case of only one occupied skipped leaf node that may be used to determine the vertex on the skipped edge 1840. Instead, portions of the original points present in the four leaf nodes may be used to determine the position of the vertex, for example, if the TriSoup edge were coded. This may lead to a much more accurate position of the vertex along the TriSoup edge. A higher accuracy of the position of the vertex along the TriSoup edge may lead to less geometry distortion in the coded leaf nodes because TriSoup triangles, that may be determined based on a position of vertex with higher accuracy, in these leaf nodes would better represent the points of the original point cloud.

Either encoding of the edge information may be skipped or the edge information may be encoded. The former may reduce the bit rate but may introduce additional distortion, whereas the later may not reduce the bit rate but may not introduce additional distortion. The present disclosure is directed to addressing this rate distortion problem by determining, based on the status of one or more leaf nodes that share a TriSoup edge, an edge coding mode as being one of a skip mode or a code mode for the TriSoup edge.

Status of shared leaf nodes (e.g., leaf nodes sharing a same TriSoup edge) may be unoccupied (non-skipped) leaf nodes, coded TriSoup nodes (corresponding to occupied non-skipped leaf nodes), or occupied skipped leaf nodes and unoccupied skipped leaf nodes. Occupied, or unoccupied, leaf nodes descendant of a skipped node, for which points have been copied, may have an, occupied or unoccupied, skipped status.

An unoccupied leaf node may not contain a portion of points of a point cloud and may not be marked as skipped by a skip flag in the occupancy tree. An unoccupied skipped leaf node may not contain a portion of the points of the point cloud and may be marked as skipped by a skip flag in the occupancy tree. A coded TriSoup node may contain a portion of the points of the point cloud represented by TriSoup triangles whose syntax elements are coded in the bitstream. An occupied skipped leaf node may contain a portion of the point cloud represented by a copy of points from a reference (e.g., motion compensated) point cloud.

A code mode of a TriSoup edge may comprises coding, in a bitstream, syntax elements (e.g., edge information of the TriSoup edge) that may represent the presence and position of a vertex on the TriSoup edge. A skip mode of a TriSoup edge may comprise obtaining a vertex position along the TriSoup edge based on the copied points belonging to occupied skipped leaf nodes that may share the TriSoup edge, without coding any syntax element (e.g., edge information) that represents the presence and position of the vertex along the TriSoup edge.

Quantization of a TriSoup vertex position along a TriSoup edge may reduce the bitrate by shortening the position codewords coded in the bitstream. However, using/applying quantization may require balancing a bitrate against distortion to decide which accuracy of quantization of the TriSoup vertex position along its edge leads to a rate reduction that is optimal regarding the increased distortion. This rate-distortion balancing optimization may be relevant if coding of the TriSoup vertex is involved. The TriSoup vertex position may not be coded and/or the bitrate associated with the TriSoup vertex may be always zero, for example, for a skipped TriSoup edge.

In at least some examples of quantizing TriSoup vertex positions, the quantization (e.g., step 1420 of FIG. 14) of vertex positions (pₖ) belonging to skipped TriSoup edges may be performed in the same manner as if the TriSoup edge were coded and not skipped, such that the same geometry quality parameter (e.g., GQP of FIG. 14 and/or FIG. 15) may be used for coded and skipped TriSoup edges. This approach may result in a sub-optimal balance between bitrate and distortion, for example, because quantization of TriSoup vertex positions along skipped edges is imposed to be the same as that for coded TriSoup edges.

As described herein, the balance between bitrate and distortion may be improved, for example, by conditionally quantizing a TriSoup vertex position along a TriSoup edge based at least in part on an edge coding mode of the TriSoup edge. The edge coding mode may be one of a skip mode or a code mode that may be determined identically at an encoder and a decoder. The TriSoup vertex position along a TriSoup skipped edge may not be quantized. The TriSoup vertex position along a TriSoup skipped edge may not be quantized, for example, if the edge coding mode is the skip mode. The TriSoup vertex position along the skipped TriSoup edge may be quantized with maximum precision. The TriSoup vertex position along the skipped TriSoup edge may be quantized with maximum precision, for example, if the edge coding mode is the skip mode and if quantization is unavoidable due to codec design and/or implementation of fixed-point maximum quantization precision. A corresponding dequantization with maximum precision may be performed, for example, if the TriSoup vertex position along the skipped TriSoup edge is quantized with maximum precision.

A (quantized) position of the TriSoup vertex along the TriSoup edge may be (de)quantized with a precision lower than the maximum precision. The quantized position of the TriSoup vertex along the TriSoup edge may be (de)quantized with a precision lower than the maximum precision, for example, if the edge coding mode is a code mode and if a TriSoup vertex is present along the TriSoup edge. Conditionally quantizing TriSoup vertex positions may provide a more optimal balance between bitrate and distortion, for example, because no distortion (or very little distortion when quantization with maximum precision is applied/used) is introduced by quantization of TriSoup vertex positions along skipped TriSoup edges. By controlling quantization based on the edge coding mode, distortion and bitrate may be balanced to improve coding efficiency.

The quantization quality for TriSoup edges operating in a code mode may be optimized, for example, based on a rate-distortion optimization (RDO) process performed by an encoder. The quantization quality for TriSoup edges operating in a skip mode may be fixed, for example, at a maximum quality or without quantization. Such an approach may ensure optimal compression performance for TriSoup edges regardless of whether the edges operate in the skip mode or the code mode.

The maximum quantization precision may be obtained for GQP equal to zero in the formula (1) defining the quantization step Qₛ, and then Qs = 1/4 such that the precision on the TriSoup vertex position after quantization is a quarter of voxel size. The TriSoup vertex positions along skipped TriSoup edges may use a quantizer with quantization step Qₛ given by formula (1) with a minimum GQP value (e.g., GQP = 0).

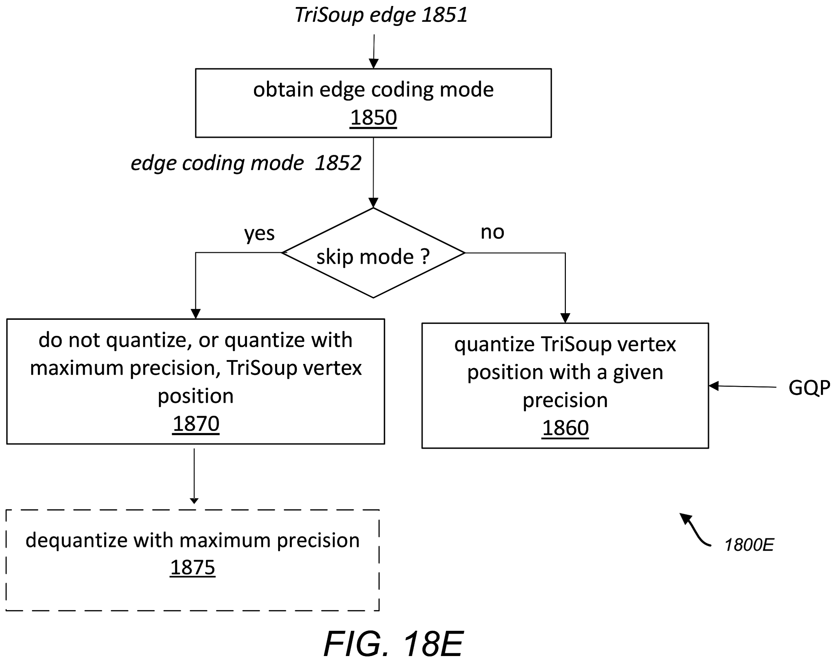

FIG. 18E shows an example of a process for quantizing a TriSoup vertex position. Specifically, FIG. 18E shows an example process of a method 1800E for quantizing a TriSoup vertex position along a TriSoup edge 1851.

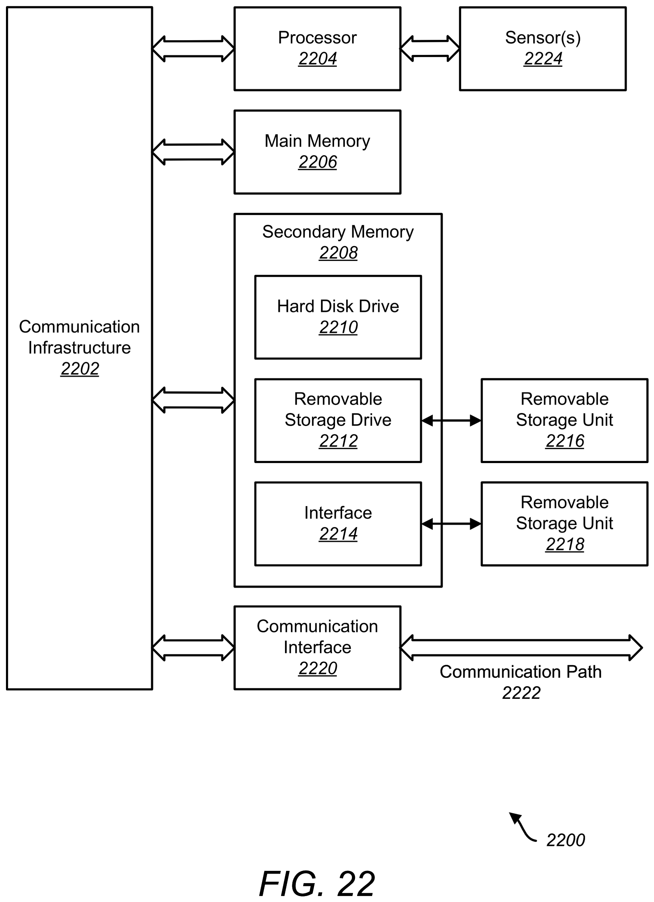

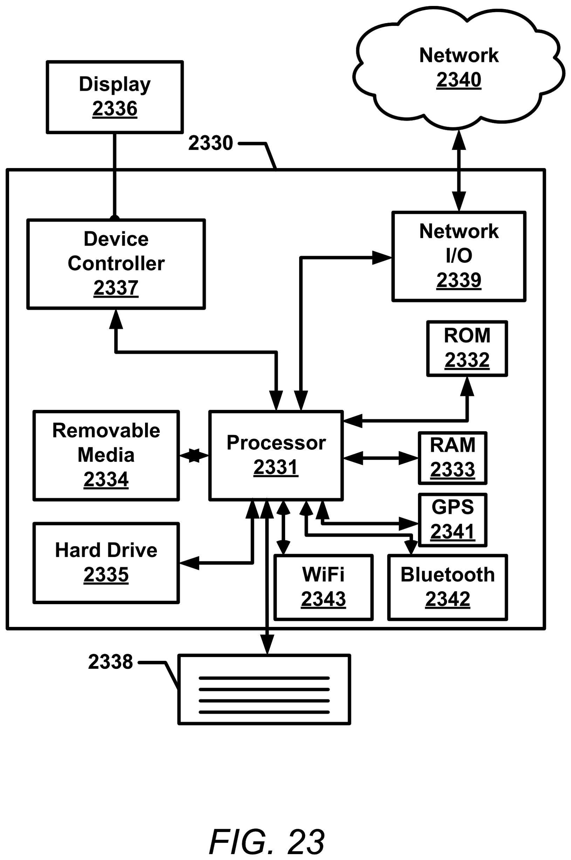

One or more steps of the example method 1800E may be performed, for example, by an encoder (e.g., encoder 114 of FIG. 1), an example computer system 2200 as described herein with respect to FIG. 22, and/or an example computing device 2330 as described herein with respect to FIG. 23.

The TriSoup edge 1851 may be shared by one or more sub-volumes (e.g., cuboids). Each of the one or more sub-volumes may correspond to a leaf node, of the occupancy tree, that may be a shared leaf node of the TriSoup edge 1851. The TriSoup edge 1851 may be shared by at most four shared leaf nodes. The TriSoup edge 1851 may be shared by at most four shared leaf nodes, for example, if the occupancy tree is an octree. The shared leaf nodes may be obtained. The shared leaf nodes may be obtained, for example, based on to the set of (e.g., occupied and/or non-occupied) leaf nodes of the occupancy tree.

At step 1850, an edge coding mode 1852 may be obtained. The edge coding mode 1852 may be one of a skip mode or a code mode. The edge coding mode 1852 may be determined by the encoder signaled as an indication of the edge coding mode in the bitstream. The edge coding mode 1852 may be determined. The edge coding mode 1852 may be determined, for example, based on edge coding modes of one or more shared leaf nodes that share the TriSoup edge.

The code mode of a TriSoup edge may comprise coding, in a bitstream, syntax elements (e.g., edge information of the TriSoup edge) that may represent the presence and/or position of a vertex on the TriSoup edge. The code mode of a TriSoup edge may comprise coding, in a bitstream, syntax elements (e.g., edge information of the TriSoup edge) that may represent the presence and/or position of a vertex on the TriSoup edge, for example, if the vertex is present along the TriSoup edge.

The skip mode of a TriSoup edge may comprise obtaining a vertex position along the TriSoup edge. The skip mode of a TriSoup edge may comprise obtaining a vertex position along the TriSoup edge, for example, based on the copied points belonging to occupied skipped leaf nodes that may share the TriSoup edge, without coding any syntax element (e.g., edge information) that may represent the presence and/or position of the vertex along the TriSoup edge.

At step 1870, a TriSoup vertex position (pₖ) along the TriSoup edge 1851 may not be quantized. A TriSoup vertex position (pₖ) along the TriSoup edge 1851 may not be quantized, for example, based on the edge coding mode 1852 being skip mode. At step 1870, the TriSoup vertex position (pₖ) may be quantized with a maximum precision. The TriSoup vertex position (pₖ) may be quantized with a maximum precision, for example, if quantization is unavoidable due to codec design and/or implementation of fixed-point maximum quantization precision. The quantization step of the quantizer may be given by formula (1) with GQP=0. At step 1875, the quantized TriSoup vertex position may be dequantized with maximum precision, for example, if the TriSoup vertex position (pₖ) is quantized with a maximum precision at step 1870. The quantization step of the quantizer may be given by formula (1) with GQP=0. The dequantization step at step 1875 may be omitted, for example, if the TriSoup vertex position (pk) is not quantized at step 1870.

At step 1860, the TriSoup vertex position (pₖ) along the TriSoup edge 1851 may be quantized using, for example, the quantizer with a quantization step defined by formula (1) with a precision lower than the maximum precision. The TriSoup vertex position (pₖ) along the TriSoup edge 1851 may be quantized using the quantizer with a quantization step defined by formula (1) with a precision lower than the maximum precision, for example, based on the edge coding mode 1852 being code mode and/or if a TriSoup vertex is present along the TriSoup edge 1851. The quantization step of the quantizer may be given by formula (1) with GQP>=0.

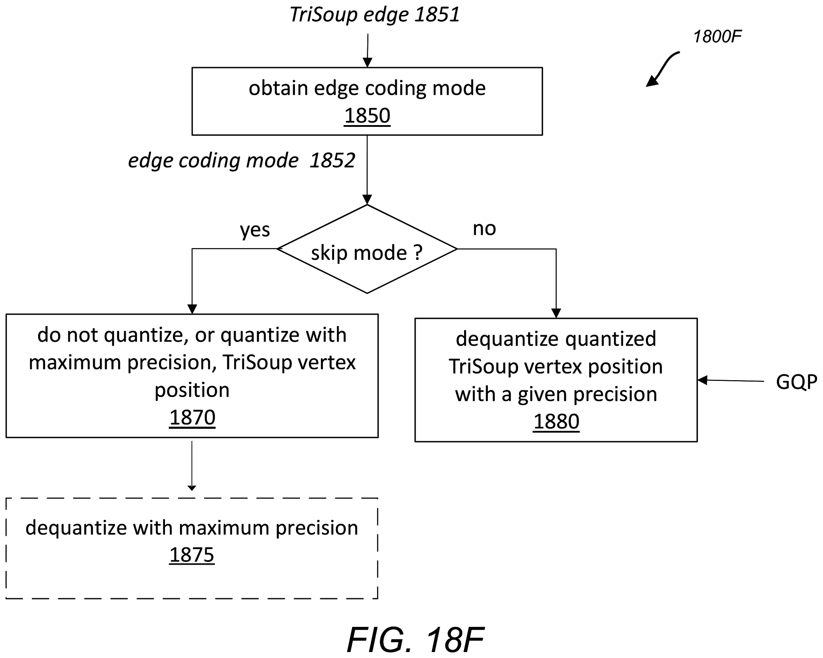

FIG. 18F shows an example of a process for dequantizing a TriSoup vertex position. Specifically, FIG. 18F shows an example of a process 1800F for dequantizing a TriSoup vertex position along a TriSoup edge 1851.

One or more steps of example process 1800F may be performed by a decoder (e.g., decoder 120 of FIG. 1), an example computer system 2200 as described herein with respect to FIG. 22, and/or an example computing device 2330 as described herein with respect to FIG. 23. The process of FIG. 18F may include the same operations (e.g., shown as having the same labeled steps) as those described with respect to FIG. 18E.

The TriSoup edge 1851 may be shared by one or more sub-volumes (e.g., cuboids). Each of the one or more sub-volumes may correspond to a leaf node, of the occupancy tree, that may be a shared leaf node of the TriSoup edge 1851. The TriSoup edge 1851 may be shared by at most four shared leaf nodes. The TriSoup edge 1851 may be shared by at most four shared leaf nodes, for example, if the occupancy tree is an octree. The shared leaf nodes may be obtained. The shared leaf nodes may be obtained, for example, based on to the set of (e.g., occupied and/or non-occupied) leaf nodes of the occupancy tree.

At step 1850, an edge coding mode 1852 may be obtained. The edge coding mode 1852 may be one of a skip mode or a code mode. The edge coding mode 1852 may be determined by the encoder signaled as an indication of the edge coding mode in the bitstream. The edge coding mode 1852 may be determined. The edge coding mode 1852 may be determined, for example, based on edge coding modes of one or more shared leaf nodes that share the TriSoup edge.

The code mode of a TriSoup edge may comprise coding, in a bitstream, syntax elements (e.g., edge information of the TriSoup edge) that may represent the presence and/or position of a vertex on the TriSoup edge. The code mode of a TriSoup edge may comprise coding, in a bitstream, syntax elements (e.g., edge information of the TriSoup edge) that may represent the presence and/or position of a vertex on the TriSoup edge, for example, if the vertex is present along the TriSoup edge.

The skip mode of a TriSoup edge may comprise obtaining a vertex position along the TriSoup edge. The skip mode of a TriSoup edge may comprise obtaining a vertex position along the TriSoup edge, for example, based on the copied points belonging to occupied skipped leaf nodes that may share the TriSoup edge, without coding any syntax element (e.g., edge information) that may represent the presence and/or position of the vertex along the TriSoup edge.

At step 1870, a TriSoup vertex position (pk) along the TriSoup edge 1851 may not be quantized. A TriSoup vertex position (pk) along the TriSoup edge 1851 may not be quantized, for example, based on the edge coding mode 1852 being skip mode. At step 1870, the TriSoup vertex position (pk) may be quantized with a maximum precision. The TriSoup vertex position (pk) may be quantized with a maximum precision, for example, if quantization is unavoidable due to codec design and/or implementation of fixed-point maximum quantization precision. The quantization step of the quantizer may be given by formula (1) with GQP=0.

At step 1875, the quantized TriSoup vertex position may be dequantized with maximum precision, for example, if the TriSoup vertex position (pₖ) is quantized with a maximum precision at step 1870. The quantization step of the quantizer may be given by formula (1) with GQP=0. The dequantization step at step 1875 may be omitted, for example, if the TriSoup vertex position (pk) is not quantized at step 1870.

Unlike the process of FIG. 18E, the process 1800F of FIG. 18F may replace step 1860 of FIG. 18E with step 1880 of FIG. 18F. At step 1880, a quantized position (pₖ) of the TriSoup vertex along the TriSoup edge 1851 may be dequantized. The quantized position (pₖ) of the TriSoup vertex along the TriSoup edge 1851 may be dequantized using, for example, the dequantizer with a quantization step defined by formula (1) with a precision lower than the maximum precision. A quantized position (pₖ) of the TriSoup vertex along the TriSoup edge 1851 may be dequantized using the dequantizer with a quantization step defined by formula (1) with a precision lower than the maximum precision, for example, based on the edge coding mode 1852 being code mode and/or if a TriSoup vertex is present along the TriSoup edge 1851. The quantization step of the dequantizer may be given by formula (1) with GQP>=0.

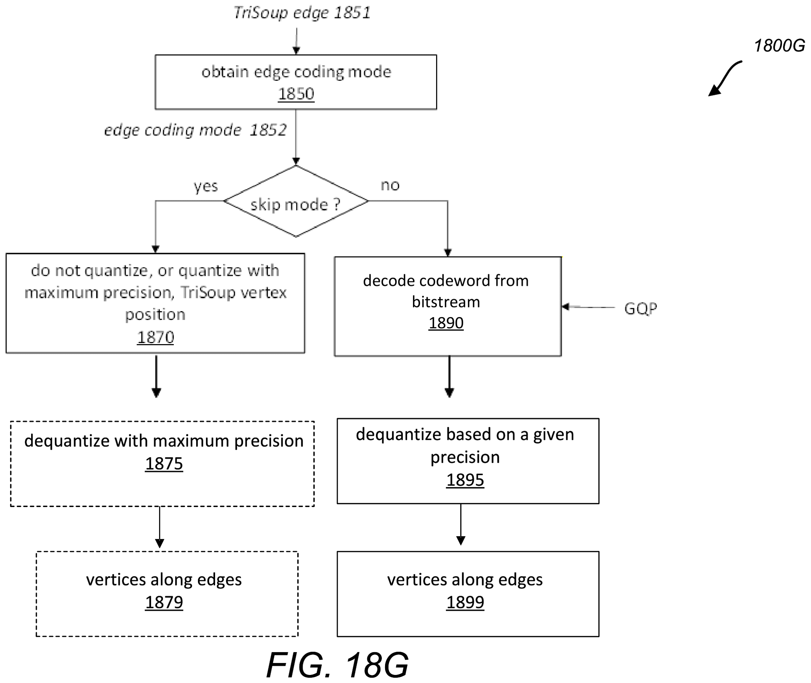

FIG. 18G shows an example of a process for quantizing a TriSoup vertex position. Specifically, FIG. 18G shows an example process of a method 1800G for quantizing a TriSoup vertex position along a TriSoup edge 1851. One or more steps of the example method 1800G may be performed, for example, by an encoder (e.g., encoder 114 of FIG. 1), an example computer system 2200 as described herein with respect to FIG. 22, and/or an example computing device 2330 as described herein with respect to FIG. 23.

The TriSoup edge 1851 may be shared by one or more sub-volumes (e.g., cuboids). Each of the one or more sub-volumes may correspond to a leaf node, of the occupancy tree, that may be a shared leaf node of the TriSoup edge 1851. The TriSoup edge 1851 may be shared by at most four shared leaf nodes. The TriSoup edge 1851 may be shared by at most four shared leaf nodes, for example, if the occupancy tree is an octree. The shared leaf nodes may be obtained. The shared leaf nodes may be obtained, for example, based on the set of (e.g., occupied and/or non-occupied) leaf nodes of the occupancy tree.

At step 1850, an edge coding mode 1852 may be obtained. The edge coding mode 1852 may be one of a skip mode or a code mode. The edge coding mode 1852 may be determined by the encoder signaled as an indication of the edge coding mode in the bitstream. The edge coding mode 1852 may be determined. The edge coding mode 1852 may be determined, for example, based on edge coding modes of one or more shared leaf nodes that share the TriSoup edge.

The code mode of a TriSoup edge may comprise coding, in a bitstream, syntax elements (e.g., edge information of the TriSoup edge) that may represent the presence and/or position of a vertex on the TriSoup edge. The code mode of a TriSoup edge may comprise coding, in a bitstream, syntax elements (e.g., edge information of the TriSoup edge) that may represent the presence and/or position of a vertex on the TriSoup edge, for example, if the vertex is present along the TriSoup edge.

The skip mode of a TriSoup edge may comprise obtaining a vertex position along the TriSoup edge. The skip mode of a TriSoup edge may comprise obtaining a vertex position along the TriSoup edge, for example, based on the copied points belonging to occupied skipped leaf nodes that may share the TriSoup edge, without coding any syntax element (e.g., edge information) that may represent the presence and/or position of the vertex along the TriSoup edge.

At step 1870, a TriSoup vertex position (pk) along the TriSoup edge 1851 may not be quantized. A TriSoup vertex position (pk) along the TriSoup edge 1851 may not be quantized, for example, based on the edge coding mode 1852 being skip mode. At step 1870, the TriSoup vertex position (pk) may be quantized with a maximum precision. The TriSoup vertex position (pk) may be quantized with a maximum precision, for example, if quantization is unavoidable due to codec design and/or implementation of fixed-point maximum quantization precision. The quantization step of the quantizer may be given by formula (1) with GQP=0. At step 1875, the quantized TriSoup vertex position may be dequantized with the maximum precision, for example, if the TriSoup vertex position (pk) is quantized with the maximum precision at step 1870. The quantization step of the quantizer may be given by formula (1) with GQP=0. The dequantization step at step 1875 may be omitted, for example, if the TriSoup vertex position (pk) is not quantized at step 1870. At step 1879, a vertex position along the TriSoup edge 1851 may be obtained based on the dequantized vertex codeword.

At step 1890, a vertex codeword associated with the TriSoup edge 1851 may be decoded from a bitstream. A vertex codeword may be decoded, for example, based on the edge coding mode 1852 being code mode.

At step 1895, a decoded vertex codeword may be dequantized. The decoded vertex codeword may be dequantized, for example, based on a given precision (e.g., GQP) associated with the TriSoup edge 1851. The decoded vertex codeword may be dequantized, for example, using the dequantizer with a quantization step defined by formula (1) with a precision lower than the maximum precision. A quantized position (pₖ) of the TriSoup vertex along the TriSoup edge 1851 may be dequantized using the dequantizer with a quantization step defined by formula (1) with a precision lower than the maximum precision, for example, based on the edge coding mode 1852 being code mode and/or if a TriSoup vertex is present along the TriSoup edge 1851. The quantization step of the dequantizer may be given by formula (1) with GQP>=0. At step 1899, a vertex position along the TriSoup edge 1851 may be obtained based on the dequantized vertex codeword.

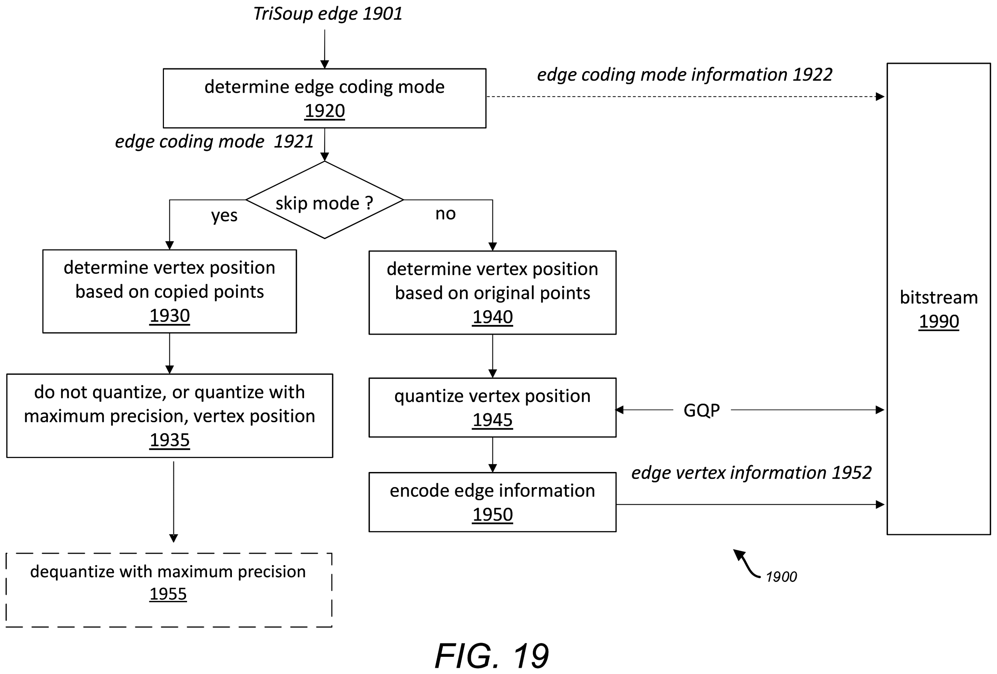

FIG. 19 shows an example of a process for determining a TriSoup vertex position. Specifically, FIG. 19 shows an example of a process 1900 for determining a TriSoup vertex position (pₖ) along a TriSoup edge 1901 in an encoding process. One or more steps of example process 1900 may be performed by an encoder (e.g., encoder 114 of FIG. 1), an example computer system 2200 as described herein with respect to FIG. 22, and/or an example computing device 2330 as described herein with respect to FIG. 23.

The TriSoup edge 1901 may be shared by one or more sub-volumes (e.g., cuboids). Each of the one or more sub-volumes may correspond to a leaf node, of the occupancy tree, that may be a shared leaf node of the TriSoup edge 1901. The TriSoup edge 1901 may be shared by at most four shared leaf nodes. The TriSoup edge 1901 may be shared by at most four shared leaf nodes, for example, if the occupancy tree is an octree. The shared leaf nodes may be obtained. The shared leaf nodes may be obtained, for example, based on the set of (e.g., occupied and non-occupied) leaf nodes of the occupancy tree.

At step 1920, an edge coding mode 1921 may be determined as one of a skip mode or a code mode. The edge coding mode 1921 may be encoded in a bitstream 1990 as edge coding mode information 1922.

At step 1930, the TriSoup vertex position (pₖ) along the TriSoup edge 1901 may be determined based on copied points that may be copied from a reference point cloud frame (e.g., a motion compensated reference point cloud frame). The TriSoup vertex position (pₖ) along the TriSoup edge 1901 may be determined based on copied points that may be copied from a reference point cloud frame (e.g., a motion compensated reference point cloud frame), for example, if the edge coding mode (1921) is the skip mode.

Copied points may be obtained for at least one occupied skipped leaf node sharing the TriSoup edge 1901. Copied points may comprise the set of all copied points belonging to all of occupied skipped leaf nodes sharing the TriSoup edge 1901. The TriSoup vertex position on the TriSoup edge 1901 may be determined based on the copied points near (e.g., relative to a distance threshold) the TriSoup edge 1901. The copied points having a distance lower than (or within) the distance threshold to the TriSoup edge 1901 may be used to determine (e.g., derive) the TriSoup vertex position.

At step 1935, the TriSoup vertex position (pₖ) along the TriSoup edge 1901 may not be quantized. At step 1935, the TriSoup vertex position (pₖ) along the TriSoup edge 1901 may be quantized with the maximum precision, for example, if quantization is unavoidable due to codec design and/or implementation of fixed-point maximum quantization precision. The quantization step of the quantizer may be given by formula (1) with GQP=0.

At step 1955, the quantized TriSoup vertex position may be dequantized with the maximum precision, for example, if the TriSoup vertex position (pk) is quantized with the maximum precision at step 1935. The quantization step of the quantizer may be given by formula (1) with GQP=0. The dequantization step at step 1955 may be omitted, for example, if the TriSoup vertex position (pk) is not quantized at step 1935.

At block 1940, the TriSoup vertex position (pₖ) along the TriSoup edge 1901 may be determined based on points of the original point cloud. The TriSoup vertex position (pₖ) along the TriSoup edge 1901 may be determined based on points of the original point cloud, for example, if the edge coding mode 1921 is a code mode and if a TriSoup vertex is present along the TriSoup edge 1901.

At step 1945, the TriSoup vertex position (pₖ) along the TriSoup edge 1901 may be quantized. The TriSoup vertex position (pₖ) along the TriSoup edge 1901 may be quantized using, for example, the quantizer with a quantization step defined by formula (1), with a precision lower than the maximum precision indicated by GQP which is encoded in the bitstream 1990.

At step 1950, edge vertex information 1952 may comprise a presence flag (sₖ) indicating whether a TriSoup vertex is present along the TriSoup edge. The edge vertex information 1952 may comprise the TriSoup vertex position (pₖ) along the TriSoup edge 1901, for example, if the TriSoup vertex is present. The edge vertex information 1952 may be encoded in the bitstream 1990.

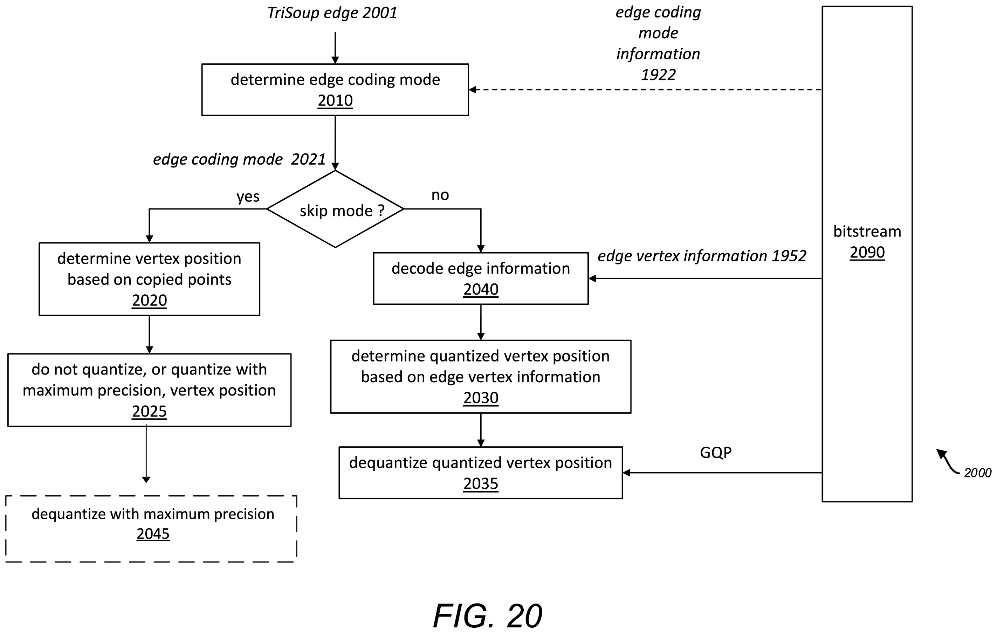

FIG. 20 shows an example of a process for determining a TriSoup vertex position. Specifically, FIG. 20 shows an example of a process 2000 for determining a TriSoup vertex position (pₖ) along a TriSoup edge 2001 in a decoding process.

One or more steps of example process of FIG. 20 may be performed by a decoder (e.g., decoder 120 of FIG. 1), an example computer system 2200 as described herein with respect to FIG. 22, and/or an example computing device 2330 as described herein with respect to FIG. 23. The bitstream 2090 may be obtained from the process 1900 of FIG. 19.

The TriSoup edge 2001 may be shared by one or more sub-volumes (e.g., cuboid). Each of the one or more sub-volumes may correspond to a leaf node, of the occupancy tree, that may be a shared leaf node of the TriSoup edge 2001. The TriSoup edge 2001 may be shared by at most four shared leaf nodes. The TriSoup edge 2001 may be shared by at most four shared leaf nodes, for example, if the occupancy tree is an octree. The shared leaf nodes may be obtained based on the set of (occupied and non-occupied) leaf nodes of the occupancy tree.

At step 2010, an edge coding mode 2021 of the TriSoup edge 2001 may be determined (e.g., obtained). The edge coding mode 2021 may be obtained as one of a skip mode or a code mode.

The edge coding mode 2021 may be determined based on edge coding modes of the one or more shared leaf nodes. The edge coding mode 2021 may be determined based on edge coding mode information 1922 obtained (e.g., decoded) from the bitstream 2090. The edge coding mode information 1922 may comprise an indication of one of the skip mode or the code mode for coding the TriSoup edge.

At step 2020, the TriSoup vertex position (pₖ) along the TriSoup edge 2001 may be determined based on copied points that are copied from a (motion compensated) reference point cloud frame. The TriSoup vertex position (pₖ) along the TriSoup edge 2001 may be determined based on copied points that are copied from a (motion compensated) reference point cloud frame, for example, if the edge coding mode 2021 is the skip mode. Copied points may be obtained for at least one occupied skipped leaf node sharing the TriSoup edge 2001. Copied points may comprise the set of all copied points belonging to all of occupied skipped leaf nodes sharing the TriSoup edge 2001. The TriSoup vertex position on the TriSoup edge 2001 may be determined based on the copied points near (e.g., relative to a distance threshold) the TriSoup edge 2001. The copied points having a distance lower than (or within) the distance threshold to the TriSoup edge 2001 may be used to determine (e.g., derive) the TriSoup vertex position. At step 2025, the TriSoup vertex position (pₖ) along the TriSoup edge (2001) may not be quantized. At step 2025, the TriSoup vertex position (pₖ) along the TriSoup edge (2001) may be quantized with maximum precision, for example, if quantization is unavoidable due to codec design and/or implementation of fixed-point maximum quantization precision. The quantization step of the quantizer may be given by formula (1) with GQP=0. At step 2045, the quantized TriSoup vertex position may be dequantized with the maximum precision, for example, if the TriSoup vertex position (pₖ) is quantized with a maximum precision at step 2025. The quantization step of the quantizer may be given by formula (1) with GQP=0. The dequantization step at step 2045 may be omitted, for example, if the TriSoup vertex position (pk) is not quantized at step 2025.

At step 2040, edge vertex information 1952 may be obtained (e.g., decoded) from the bitstream 2090. The edge vertex information 1952 may be obtained (e.g., decoded) from the bitstream 2090, for example, if the edge coding mode 2021 is code mode. The edge vertex information 1952 may include a presence flag (sₖ) indicating whether a TriSoup vertex is present along the TriSoup edge and, if present, the quantized TriSoup vertex position (pₖ) along the TriSoup edge 2001.

At step 2030, the quantized TriSoup vertex position (pₖ) along the TriSoup edge 2001 may be determined as the quantized TriSoup vertex position represented by the decoded edge vertex information 1952. The quantized TriSoup vertex position (pₖ) along the TriSoup edge 2001 may be determined as the quantized TriSoup vertex position represented by the decoded edge vertex information 1952, for example, if the presence flag (sₖ) indicates the presence of a TriSoup vertex along the TriSoup edge 2001.

At step 2035, the quantized TriSoup vertex position, represented by the decoded edge vertex information 1952, may be dequantized. The quantized TriSoup vertex position, represented by the decoded edge vertex information 1952, may be dequantized, for example, using the dequantizer with a quantization step defined by formula (1), with a precision lower than the maximum precision indicated by GQP, which may be decoded from the bitstream 2090.

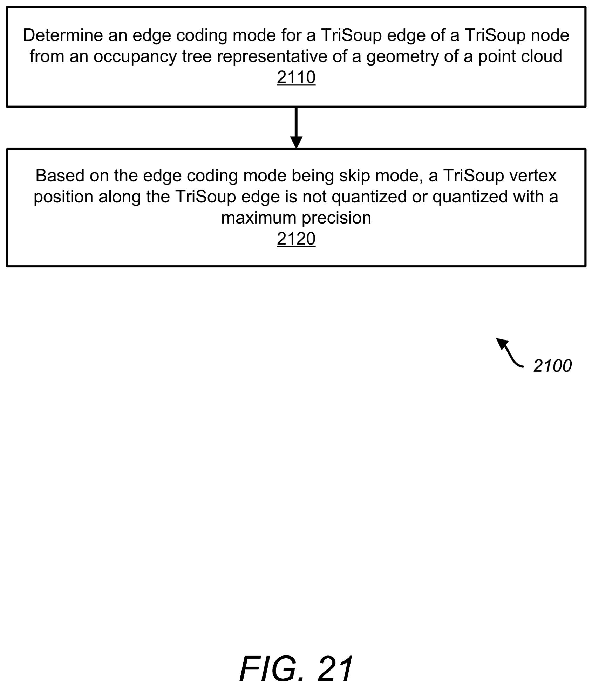

FIG. 21 shows an example method for dequantizing/quantizing a TriSoup vertex position. Specifically, FIG. 21 shows a flowchart of an example method 2100 for dequantizing/quantizing a TriSoup vertex position along a TriSoup edge. One or more steps of example method 2100 may be performed by an encoder (e.g., encoder 114 of FIG. 1) and/or a decoder (e.g., decoder 120 of FIG. 1), an example computer system 2200 as described herein with respect to FIG. 22, and/or an example computing device 2330 as described herein with respect to FIG. 23.

At step 2110, an edge coding mode for a TriSoup edge may be determined. The edge coding mode may be determined to be either a skip mode or a code mode. The TriSoup edge may be associated with (or correspond to) a TriSoup node of an occupancy tree representing a geometry of a point cloud (e.g., the original point cloud encoded by the encoder).

A vertex position on the TriSoup edge may be determined based on the edge coding mode. As described herein, the vertex position may be derived based on copied points of a reference point cloud frame, for example, in the skip mode.

At step 2120, a TriSoup vertex position along the TriSoup edge may be either not quantized or quantized with a maximum precision. A TriSoup vertex position along the TriSoup edge may be either not quantized or quantized with a maximum precision, for example, based on the edge coding mode being skip mode. The TriSoup vertex position may be quantized with the maximum precision. The TriSoup vertex position may be quantized with a maximum precision, for example, if codec design requires quantization or if fixed-point maximum quantization precision is implemented.

At the encoder, the TriSoup vertex position along the TriSoup edge may be quantized with a precision lower than the maximum precision. The TriSoup vertex position along the TriSoup edge may be quantized with a precision lower than the maximum precision, for example, if the edge coding mode is a code mode and if a TriSoup vertex is present along the TriSoup edge.

At the decoder, a quantized position of the TriSoup vertex along the TriSoup edge may be dequantized with a precision lower than the maximum precision. A quantized position of the TriSoup vertex along the TriSoup edge may be dequantized with a precision lower than the maximum precision, for example, if the edge coding mode is a code mode and a TriSoup vertex is present along the TriSoup edge.

Features of the present disclosure may be implemented in hardware using analog and/or digital circuits, in software, through the execution of instructions by one or more general purpose or special-purpose processors, or as a combination of hardware and software. Consequently, features of the present disclosure may be implemented in the environment of a computer system or other processing system. An example of such a computer system 2200 is shown in FIG. 22. FIG. 22 shows an example computer system in which examples of the present disclosure may be implemented. For example, the example computer system 2200 shown in FIG. 22 may implement one or more of the methods described herein. For example, various devices and/or systems described herein (e.g., in FIGS. 1, 6, and 10-21) may be implemented in the form of one or more computer systems 2200. Furthermore, each of the steps of the flowcharts depicted in this disclosure may be implemented on one or more computer systems 2200. If/when more than one computer system 2200 is used to implement features of the present disclosure, the computer systems 2200 may be interconnected by one or more networks to form a cluster of computer systems that may act as a single pool of seamless resources. The interconnected computer systems 2200 may form a "cloud" of computers.

The computer system 2200 may comprise one or more processors, such as a processor 2204. The processor 2204 may be a special purpose processor, a general purpose processor, a microprocessor, and/or a digital signal processor. The processor 2204 may be connected to a communication infrastructure 2202 (e.g., a bus or network). The computer system 2200 may also comprise a main memory 2206 (e.g., a random access memory (RAM)) and/or a secondary memory 2208.

The secondary memory 2208 may comprise a hard disk drive 2210 and/or a removable storage drive 2212 (e.g., a magnetic tape drive, an optical disk drive, and/or the like). The removable storage drive 2212 may read from and/or write to a removable storage unit 2216. The removable storage unit 2216 may comprise a magnetic tape, an optical disk, and/or the like. The removable storage unit 2216 may be read by and/or may be written to the removable storage drive 2212. The removable storage unit 2216 may comprise a computer usable storage medium having stored therein computer software and/or data.

The secondary memory 2208 may comprise other similar means for allowing computer programs or other instructions to be loaded into the computer system 2200. Such means may include a removable storage unit 2218 and/or an interface 2214. Examples of such means may comprise a program cartridge and/or a cartridge interface (such as in video game devices), a removable memory chip (such as an erasable programmable read-only memory (EPROM) or a programmable read-only memory (PROM)) and associated socket, a thumb drive and USB port, and/or other removable storage units 2218 and interfaces 2214 which may allow software and/or data to be transferred from the removable storage unit 2218 to the computer system 2200.

The computer system 2200 may also comprise a communications interface 2220. The communications interface 2220 may allow software and data to be transferred between the computer system 2200 and external devices. Examples of the communications interface 2220 may include a modem, a network interface (e.g., an Ethernet card), a communications port, etc. Software and/or data transferred via the communications interface 2220 may be in the form of signals which may be electronic, electromagnetic, optical, and/or other signals capable of being received by the communications interface 2220. The signals may be provided to the communications interface 2220 via a communications path 2222. The communications path 2222 may carry signals and may be implemented using wire or cable, fiber optics, a phone line, a cellular phone link, an RF link, and/or any other communications channel(s).

The computer system 2200 may also comprise one or more sensor(s) 2224. The sensor(s) 2224 may measure or detect one or more physical quantities and convert the measured or detected physical quantities into an electrical signal in digital and/or analog form. For example, the sensor(s) 2224 may include an eye tracking sensor to track the eye movement of a user. A display of a point cloud may be updated, for example, based on the eye movement of a user. The sensor(s) 2224 may include a head tracking sensor to track the head movement of a user. A display of a point cloud may be updated, for example, based on the head movement of a user. The sensor(s) 2224 may include a camera sensor for taking photographs and/or a 3D scanning device (e.g., a laser scanning device, a structured light scanning device, and/or a modulated light scanning device). The 3D scanning devices may determine geometry information by moving one or more laser heads, structured light, and/or modulated light cameras relative to the object or scene being scanned. The geometry information may be used to construct a point cloud.

A computer program medium and/or a computer readable medium may be used to refer to tangible storage media, such as removable storage units 2216 and 2218 or a hard disk installed in the hard disk drive 2210. The computer program products may be means for providing software to the computer system 2200. The computer programs (which may also be called computer control logic) may be stored in the main memory 2206 and/or the secondary memory 2208. The computer programs may be received via the communications interface 2220. Such computer programs, when executed, may enable the computer system 2200 to implement the present disclosure as discussed herein. In particular, the computer programs, when executed, may enable the processor 2204 to implement the processes of the present disclosure, such as any of the methods described herein. Accordingly, such computer programs may represent controllers of the computer system 2200.

Features of the disclosure may be implemented in hardware using, for example, hardware components such as application-specific integrated circuits (ASICs) and gate arrays. Implementation of a hardware state machine to perform the functions described herein will also be apparent to persons skilled in the relevant art(s).

FIG. 23 shows example elements of a computing device that may be used to implement any of the various devices described herein, including, for example, a source device (e.g., 102), an encoder (e.g., 114), a destination device (e.g., 106), a decoder (e.g., 120), and/or any computing device described herein. The computing device 2330 may include one or more processors 2331, which may execute instructions stored in the random-access memory (RAM) 2333, the removable media 2334 (such as a Universal Serial Bus (USB) drive, compact disk (CD) or digital versatile disk (DVD), or floppy disk drive), or any other desired storage medium. Instructions may also be stored in an attached (or internal) hard drive 2335. The computing device 2330 may also include a security processor (not shown), which may execute instructions of one or more computer programs to monitor the processes executing on the processor 2331 and any process that requests access to any hardware and/or software components of the computing device 2330 (e.g., ROM 2332, RAM 2333, the removable media 2334, the hard drive 2335, the device controller 2337, a network interface 2339, a GPS 2341, a Bluetooth interface 2342, a WiFi interface 2343, etc.). The computing device 2330 may include one or more output devices, such as the display 2336 (e.g., a screen, a display device, a monitor, a television, etc.), and may include one or more output device controllers 2337, such as a video processor. There may also be one or more user input devices 2327, such as a remote control, keyboard, mouse, touch screen, microphone, etc. The computing device 2330 may also include one or more network interfaces, such as a network interface 2339, which may be a wired interface, a wireless interface, or a combination of the two. The network interface 2339 may provide an interface for the computing device 2330 to communicate with a network 2340 (e.g., a RAN, or any other network). The network interface 2339 may include a modem (e.g., a cable modem), and the external network 2340 may include communication links, an external network, an in-home network, a provider's wireless, coaxial, fiber, or hybrid fiber/coaxial distribution system (e.g., a DOCSIS network), or any other desired network. Additionally, the computing device 2330 may include a location-detecting device, such as a global positioning system (GPS) microprocessor 2341, which may be configured to receive and process global positioning signals and determine, with possible assistance from an external server and antenna, a geographic position of the computing device 2330.

The example in FIG. 23 may be a hardware configuration, although the components shown may be implemented as software as well. Modifications may be made to add, remove, combine, divide, etc. components of the computing device 2330 as desired. Additionally, the components may be implemented using basic computing devices and components, and the same components (e.g., processor 2331, ROM storage 2332, display 2336, etc.) may be used to implement any of the other computing devices and components described herein. For example, the various components described herein may be implemented using computing devices having components such as a processor executing computer-executable instructions stored on a computer-readable medium, as shown in FIG. 23. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: obtaining, by a computing device, a TriSoup edge shared by one or more shared leaf nodes of an occupancy tree representing a geometry of a point cloud.

Clause 2. The method of clause 1, further comprising receiving an edge coding mode of the TriSoup edge.

Clause 3. The method of any one of clauses 1 to 2, further comprising dequantizing, based on the received edge coding mode, a TriSoup vertex position along the TriSoup edge.

Clause 4. The method of any one of clauses 1 to 3, further comprising: determining the TriSoup vertex position based on the edge coding mode being a skip mode.

Clause 5. The method of any one of clauses 1 to 4, further comprising: constructing, based on the TriSoup vertex position, one or more TriSoup triangles.

Clause 6. The method of any one of clauses 1 to 5, further comprising voxelizing the one or more TriSoup triangles.

Clause 7. The method of any one of clauses 1 to 6, further comprising reconstructing, based on the voxelizing, the point cloud.

Clause 8. The method of any one of clauses 1 to 7, further comprising: causing output of the reconstructed point cloud for display via a display device.

Clause 9. The method of any one of clauses 1 to 8, further comprising dequantizing the TriSoup vertex position with maximum precision based on the edge coding mode being a skip mode.

Clause 10. The method of any one of clauses 1 to 9, further comprising obtaining a TriSoup edge shared by one or more sub-volumes associated with the one or more shared leaf nodes of the occupancy tree, wherein each sub-volume is associated with a shared leaf node of the occupancy tree.

Clause 11. The method of any one of clauses 1 to 10, further comprising receiving a status of each of the one or more shared leaf nodes.

Clause 12. The method of any one of clauses 1 to 11, further comprising determining, based on the status of the one or more shared leaf nodes, the edge coding mode of the TriSoup edge.

Clause 13. The method of any one of clauses 1 to 12, further comprising decoding, from a bitstream, edge coding mode information indicating the edge coding mode.

Clause 14. The method of any one of clauses 1 to 13, wherein a quantization precision is determined based on the edge coding mode.

Clause 15. The method of any one of clauses 1 to 14, wherein, based on the edge coding mode being a skip mode, the TriSoup vertex position along the TriSoup edge is not quantized or quantized with maximum precision.

Clause 16. The method of any one of clauses 1 to 15, further comprising, based on the edge coding mode being a code mode, dequantizing a quantized position of the TriSoup vertex along the TriSoup edge with a precision lower than the maximum precision.

Clause 17. The method of any one of clauses 1 to 16, further comprising receiving the edge coding mode based on a status of the one or more shared leaf nodes that share the TriSoup edge.

Clause 18. A computing device comprising: one or more processors; and memory storing instructions that, when executed by the one or more processors, cause the computing device to perform the method of any one of clauses 1 to 17.

Clause 19. A system comprising: a first computing device configured to perform the method of any one of clauses 1 to 17; and a second computing device configured to send the edge coding mode of the TriSoup edge.

Clause 20. A computer-readable medium storing instructions that, when executed, cause performance of the method of any one of clauses 1 to 17.

Clause 21. A method comprising obtaining, by a computing device, a TriSoup edge shared by one or more sub-volumes associated with shared leaf nodes of an occupancy tree representing a geometry of a point cloud.

Clause 22. The method of clause 21, further comprising receiving an edge coding mode of the TriSoup edge, wherein the edge coding mode is a skip mode.

Clause 23. The method of any one of clauses 21 to 22, further comprising determining a TriSoup vertex position along the TriSoup edge based on the edge coding mode being the skip mode.

Clause 24. The method of any one of clauses 21 to 23, further comprising dequantizing the TriSoup vertex position.

Clause 25. The method of any one of clauses 21 to 24, further comprising decoding, from a bitstream, edge coding mode information indicating the edge coding mode.

Clause 26. The method of any one of clauses 21 to 25, wherein a quantization precision is determined based on the edge coding mode being the skip mode.

Clause 27. The method of any one of clauses 21 to 26, wherein, based on the edge coding mode being the skip mode, the TriSoup vertex position along the TriSoup edge is not quantized or quantized with maximum precision.

Clause 28. The method of any one of clauses 21 to 27, further comprising dequantizing the TriSoup vertex position with maximum precision based on the edge coding mode being the skip mode.

Clause 29. The method of any one of clauses 21 to 28, further comprising receiving the edge coding mode based on a status of the one or more respective shared leaf nodes that share the TriSoup edge.

Clause 30. A computing device comprising: one or more processors; and memory storing instructions that, when executed by the one or more processors, cause the computing device to perform the method of any one of clauses 21 to 29.

Clause 31. A system comprising: a first computing device configured to perform the method of any one of clauses 21 to 29; and a second computing device configured to send the edge coding mode of the TriSoup edge.

Clause 32. A computer-readable medium storing instructions that, when executed, cause performance of the method of any one of clauses 21 to 29.

Clause 33. A method comprising: obtaining, by a computing device, a TriSoup edge shared by one or more shared leaf nodes of an occupancy tree representing a geometry of a point cloud.

Clause 34. The method of clause 33, further comprising receiving an edge coding mode of the TriSoup edge.

Clause 35. The method of any one of clauses 33 to 34, further comprising quantizing, based on the edge coding mode, a TriSoup vertex position along the TriSoup edge.

Clause 36. The method of any one of clauses 33 to 35, further comprising encoding, in a bitstream, the edge coding mode as edge coding mode information.

Clause 37. The method of any one of clauses 33 to 36, wherein, based on the edge coding mode being a skip mode, the TriSoup vertex position along the TriSoup edge is
not quantized or quantized with maximum precision.

Clause 38. A computing device comprising: one or more processors; and memory storing instructions that, when executed by the one or more processors, cause the computing device to perform the method of any one of clauses 33 to 37.

Clause 39. A system comprising: a first computing device configured to perform the method of any one of clauses 33 to 37; and a second computing device configured to send the edge coding mode of the TriSoup edge.

Clause 40. A computer-readable medium storing instructions that, when executed, cause performance of the method of any one of clauses 33 to 37.

Clause 41. A method comprising: obtaining a TriSoup edge shared by one or more sub-volumes corresponding to one or more respective shared leaf nodes of an occupancy tree representative of a geometry of a point cloud.

Clause 42. The method of clause 41, further comprising obtaining an edge coding mode of the TriSoup edge.

Clause 43. The method of any one of clauses 41 to 42, further comprising quantizing, based on whether the edge coding mode is a skip mode or a code mode, a TriSoup vertex position along the TriSoup edge.

Clause 44. The method of any one of clauses 41 to 43, further comprising encoding, in a bitstream, the edge coding mode as an edge coding mode information.

Clause 45. A method comprising: obtaining a TriSoup edge shared by one or more sub-volumes corresponding to one or more respective shared leaf nodes of an occupancy tree representative of a geometry of a point cloud.

Clause 46. The method of clause 45, further comprising obtaining an edge coding mode of the TriSoup edge.

Clause 47. The method of any one of clauses 45 to 46, further comprising dequantizing, based on whether the edge coding mode is a skip mode or a code mode, a TriSoup vertex position along the TriSoup edge.

Clause 48. The method of any one of clauses 45 to 47, further comprising obtaining a TriSoup edge shared by one or more sub-volume, each volume corresponding to a shared leaf node of an occupancy tree representative of a geometry of a point cloud.

Clause 49. The method of any one of clauses 45 to 48, further comprising obtaining a status of each shared leaf node.

Clause 50. The method of any one of clauses 45 to 49, further comprising determining, based on the status of the one or more shared leaf nodes, the edge coding mode of the TriSoup edge.

Clause 51. The method of any one of clauses 45 to 50, further comprising decoding, from a bitstream, an edge coding mode information representative of the edge coding mode.

Clause 52. The method of any one of clauses 45 to 51, wherein a quantization precision is set based on whether the edge coding mode is the skip mode or the code mode.

Clause 53. The method of any one of clauses 45 to 52, wherein, based on the edge coding mode being the skip mode, the TriSoup vertex position along the TriSoup edge is not quantized or dequantized with maximum precision.

Clause 54. The method of any one of clauses 45 to 53, wherein, based on the edge coding mode being the code mode, a quantized position of the TriSoup vertex along the TriSoup edge is dequantized with a precision lower than the maximum precision.

Clause 55. The method of any one of clauses 45 to 54, wherein the based on the edge coding mode being the skip mode, the TriSoup vertex position is quantized along the TriSoup edge uses a quantization step proportional to power of two of a geometry quality parameter.

Clause 56. The method of any one of clauses 45 to 55, wherein the geometry quality parameter equals 0.

Clause 57. The method of any one of clauses 45 to 56, wherein the precision lower than the maximum precision comprises is set based on the geometry quality parameter being set larger than 0.

Clause 58. The method of any one of clauses 45 to 57, wherein the edge coding mode is obtained based on status of one or more shared leaf nodes that share the TriSoup edge.

Clause 59. The method of any one of clauses 45 to 58, wherein a status of a shared leaf node is unoccupied to indicate leaf node does not contain a portion of the points of the point cloud and is not marked as skipped by a skip flag in the occupancy tree.

Clause 60. The method of any one of clauses 45 to 59, wherein a status of a shared leaf node is coded TriSoup to indicate the leaf node does contain a portion of the points of the point cloud represented by TriSoup triangles whose syntax elements are coded in the bitstream.

Clause 61. The method of any one of clauses 45 to 60, wherein a status of a shared leaf node is occupied skipped to indicate does contain a portion of the point cloud represented by a copy of points from a motion compensated reference point cloud.

Clause 62. The method of any one of clauses 45 to 61, wherein a status of a shared leaf node is unoccupied skipped leaf nodes to indicate the leaf node does not contain a portion of the points of the point cloud and is marked as skipped by a skip flag in the occupancy tree.

Clause 63. The method of any one of clauses 45 to 62, wherein the edge coding mode may be obtained based on counting the status of the one or more shared leaf nodes.

Clause 64. The method of any one of clauses 45 to 63, wherein if there is at least a predetermined number of shared leaf nodes with coded TriSoup status, the edge coding mode is code mode.

Clause 65. The method of any one of clauses 45 to 64, wherein the predetermined number is set to 2 or 3.

Clause 66. The method of any one of clauses 45 to 65, wherein, if there is no more than a predetermined number of shared leaf nodes with occupied or unoccupied skipped status, the edge coding mode is code mode.

Clause 67. The method of any one of clauses 45 to 66, wherein the predetermined number is 1 or 2.

Clause 68. The method of any one of clauses 45 to 67, wherein the edge coding mode information is entropy encoded in a bitstream or decoded from the bitstream based on contexts selected based on the status of the one or more shared leaf nodes.

Clause 69. The method of any one of clauses 45 to 68, wherein selection of the contexts is based on counting the status of the one or more shared leaf nodes.

Clause 70. The method of any one of clauses 45 to 69, wherein a high number of shared leaf nodes with TriSoup coded status leads to a selection of a context representative of a high probability of having determined the code mode, and a high number of shared leaf nodes with occupied or unoccupied skipped status or unoccupied status leads to a selection of context representative of a high probability of having determined the skip mode.

Clause 71. A computing device comprising: one or more processors; and memory storing instructions that, when executed by the one or more processors, cause the computing device to perform the method of any one of clauses 45 to 70.

Clause 72. A system comprising: a first computing device configured to perform the method of any one of clauses 45 to 71; and a second computing device configured to send the edge coding mode of the TriSoup edge.

Clause 72. A computer-readable medium storing instructions that, when executed, cause performance of the method of any one of clauses 45 to 72.

A computing device may perform a method comprising multiple operations. The computing device may comprise a decoder. The computing device may obtain a TriSoup edge shared by one or more shared leaf nodes of an occupancy tree representing a geometry of a point cloud. The computing device may receive an edge coding mode of the TriSoup edge. The computing device may dequantize a TriSoup vertex position along the TriSoup edge, for example, based on the received edge coding mode. The computing device may determine the TriSoup vertex position, for example, based on the edge coding mode being a skip mode. The computing device may construct one or more TriSoup triangles, for example, based on the TriSoup vertex position. The computing device may voxelize the one or more TriSoup triangles. The computing device may reconstruct the point cloud, for example, based on the voxelizing. The computing device may cause output of the reconstructed point cloud for display via a display device. The computing device may dequantize the TriSoup vertex position with maximum precision, for example, based on the edge coding mode being a skip mode. The computing device may obtain a TriSoup edge shared by one or more sub-volumes associated with the one or more shared leaf nodes of the occupancy tree. Each sub-volume may be associated with a shared leaf node of the occupancy tree. The computing device may receive a status of each of the one or more shared leaf nodes. The computing device may determine the edge coding mode of the TriSoup edge, for example, based on the status of the one or more shared leaf nodes. The computing device may decode, from a bitstream, edge coding mode information indicating the edge coding mode. A quantization precision may be determined, for example, based on the edge coding mode. The TriSoup vertex position along the TriSoup edge may not be quantized or may be quantized with maximum precision. The computing device may dequantize a quantized position of the TriSoup vertex along the TriSoup edge with a precision lower than the maximum precision, for example, based on the edge coding mode being a code mode. The computing device may receive the edge coding mode, for example, based on a status of the one or more shared leaf nodes that share the TriSoup edge. The computing device may comprise one or more processors and memory, storing instructions that, when executed by the one or more processors, perform the method described herein. A system may comprise the computing device configured to perform the described method, additional operations, and/or include additional elements; and a second computing device configured to send the edge coding mode of the TriSoup edge. A computer-readable medium may store instructions that, when executed, cause performance of the described method, additional operations, and/or include additional elements.

A computing device may perform a method comprising multiple operations. The computing device may comprise a decoder. The computing device may obtain a TriSoup edge shared by one or more sub-volumes associated with shared leaf nodes of an occupancy tree representing a geometry of a point cloud. The computing device receive an edge coding mode of the TriSoup edge. The edge coding mode may be a skip mode. The computing device may determine a TriSoup vertex position along the TriSoup edge, for example, based on the edge coding mode being the skip mode. The computing device may dequantize the TriSoup vertex position. The computing device may decode, from a bitstream, edge coding mode information indicating the edge coding mode. A quantization precision may be determined, for example, based on the edge coding mode being the skip mode. The TriSoup vertex position along the TriSoup edge may not be quantized or may be quantized with maximum precision, for example, based on the edge coding mode being the skip mode. The computing device may dequantize the TriSoup vertex position with maximum precision, for example, based on the edge coding mode being the skip mode. The computing device may receive the edge coding mode, for example, based on a status of the one or more respective shared leaf nodes that share the TriSoup edge. The computing device may comprise one or more processors and memory, storing instructions that, when executed by the one or more processors, perform the method described herein. A system may comprise the computing device configured to perform the described method, additional operations, and/or include additional elements; and a second computing device configured to send the edge coding mode of the TriSoup edge. A computer-readable medium may store instructions that, when executed, cause performance of the described method, additional operations, and/or include additional elements.

A computing device may perform a method comprising multiple operations. The computing device may comprise an encoder. The computing device may obtain a TriSoup edge shared by one or more shared leaf nodes of an occupancy tree representing a geometry of a point cloud. The computing device may receive an edge coding mode of the TriSoup edge. The computing device may quantize a TriSoup vertex position along the TriSoup edge, for example, based on the edge coding mode. The computing device may encode, in a bitstream, the edge coding mode as edge coding mode information. The TriSoup vertex position along the TriSoup edge may not be quantized or may be quantized with maximum precision. The computing device may comprise one or more processors and memory, storing instructions that, when executed by the one or more processors, perform the method described herein. A system may comprise the computing device configured to perform the described method, additional operations, and/or include additional elements; and a second computing device configured to send the edge coding mode of the TriSoup edge. A computer-readable medium may store instructions that, when executed, cause performance of the described method, additional operations, and/or include additional elements.

A computing device may perform a method comprising multiple operations. The computing device may comprise an encoder or a decoder. The computing device may obtain a TriSoup edge shared by one or more sub-volumes corresponding to one or more respective shared leaf nodes of an occupancy tree representative of a geometry of a point cloud. The computing device may obtain an edge coding mode of the TriSoup edge. The computing device may quantize a TriSoup vertex position along the TriSoup edge, for example, based on whether the edge coding mode is a skip mode or a code mode. The computing device may encode, in a bitstream, the edge coding mode as an edge coding mode information. The computing device may obtain a TriSoup edge shared by one or more sub-volumes corresponding to one or more respective shared leaf nodes of an occupancy tree representative of a geometry of a point cloud. The computing device may obtain an edge coding mode of the TriSoup edge. The computing device may dequantize a TriSoup vertex position along the TriSoup edge, for example, based on whether the edge coding mode is a skip mode or a code mode. The computing device may obtain a TriSoup edge shared by one or more sub-volume, each volume corresponding to a shared leaf node of an occupancy tree representative of a geometry of a point cloud. The computing device may obtain a status of each shared leaf node. The computing device may determine the edge coding mode of the TriSoup edge, for example, based on the status of the one or more shared leaf nodes. The computing device may decode, from a bitstream, an edge coding mode information representative of the edge coding mode. A quantization precision may be set, for example, based on whether the edge coding mode is the skip mode or the code mode. The TriSoup vertex position along the TriSoup edge may not be quantized or may be dequantized with maximum precision, for example, based on the edge coding mode being the skip mode. A quantized position of the TriSoup vertex along the TriSoup edge may be dequantized with a precision lower than the maximum precision, for example, based on the edge coding mode being the code mode. The TriSoup vertex position may be quantized along the TriSoup edge, for example, based on the edge coding mode being the skip mode. A quantization step proportional to power of two of a geometry quality parameter may be used, for example, based on the edge coding mode being the skip mode. The geometry quality parameter may be equal to 0. The precision lower than the maximum precision comprises may be set, for example, based on the geometry quality parameter being set larger than 0. The edge coding mode may be obtained, for example, based on status of one or more shared leaf nodes that share the TriSoup edge. A status of a shared leaf node may be unoccupied to indicate leaf node does not contain a portion of the points of the point cloud and is not marked as skipped by a skip flag in the occupancy tree. A status of a shared leaf node may be coded TriSoup to indicate the leaf node does contain a portion of the points of the point cloud represented by TriSoup triangles whose syntax elements are coded in the bitstream. A status of a shared leaf node may be occupied skipped to indicate does contain a portion of the point cloud represented by a copy of points from a (motion compensated) reference point cloud. A status of a shared leaf node may be unoccupied skipped leaf nodes to indicate the leaf node does not contain a portion of the points of the point cloud and is marked as skipped by a skip flag in the occupancy tree. The edge coding mode may be obtained based on counting the status of the one or more shared leaf nodes. The edge coding mode may be code mode, for example, if there is at least a predetermined number of shared leaf nodes with coded TriSoup status. The predetermined number may be set to 2 or 3. The edge coding mode may be code mode, for example, if there is no more than a predetermined number of shared leaf nodes with occupied or unoccupied skipped status. The predetermined number may be 1 or 2. The edge coding mode information may be entropy encoded in a bitstream or decoded from the bitstream based on contexts selected based on the status of the one or more shared leaf nodes. Selection of the contexts may be, for example, based on counting the status of the one or more shared leaf nodes. A high number of shared leaf nodes with TriSoup coded status may lead to a selection of a context representative of a high probability of having determined the code mode. A high number of shared leaf nodes with occupied or unoccupied skipped status or unoccupied status may lead to a selection of context representative of a high probability of having determined the skip mode. The computing device may comprise one or more processors and memory, storing instructions that, when executed by the one or more processors, perform the method described herein. A system may comprise the computing device configured to perform the described method, additional operations, and/or include additional elements; and a second computing device configured to send the edge coding mode of the TriSoup edge. A computer-readable medium may store instructions that, when executed, cause performance of the described method, additional operations, and/or include additional elements.

One or more examples herein may be described as a process which may be depicted as a flowchart, a flow diagram, a data flow diagram, a structure diagram, and/or a block diagram. Although a flowchart may describe operations as a sequential process, one or more of the operations may be performed in parallel or concurrently. The order of the operations shown may be re-arranged. A process may be terminated when its operations are completed, but could have additional steps not shown in a figure. A process may correspond to a method, a function, a procedure, a subroutine, a subprogram, etc. If a process corresponds to a function, its termination may correspond to a return of the function to the calling function or the main function.

Operations described herein may be implemented by hardware, software, firmware, middleware, microcode, hardware description languages, or any combination thereof. When implemented in software, firmware, middleware or microcode, the program code or code segments to perform the necessary tasks (e.g., a computer-program product) may be stored in a computer-readable or machine-readable medium. A processor(s) may perform the necessary tasks. Features of the disclosure may be implemented in hardware using, for example, hardware components such as application-specific integrated circuits (ASICs) and gate arrays. Implementation of a hardware state machine to perform the functions described herein will also be apparent to persons skilled in the art.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein. Computer-readable medium may comprise, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

A non-transitory tangible computer readable media may comprise instructions executable by one or more processors configured to cause operations described herein. An article of manufacture may comprise a non-transitory tangible computer readable machine-accessible medium having instructions encoded thereon for enabling programmable hardware to cause a device (e.g., an encoder, a decoder, a transmitter, a receiver, and the like) to allow operations described herein. The device, or one or more devices such as in a system, may include one or more processors, memory, interfaces, and/or the like.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more of the operations described herein may be conditional. For example, one or more operations may be performed if certain criteria are met, such as in computing device, a communication device, an encoder, a decoder, a network, a combination of the above, and/or the like. Example criteria may be based on one or more conditions such as device configurations, traffic load, initial system set up, packet sizes, traffic characteristics, a combination of the above, and/or the like. If the one or more criteria are met, various examples may be used. It may be possible to implement any portion of the examples described herein in any order and based on any condition.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
obtaining, by a computing device, a TriSoup edge shared by one or more shared leaf nodes of an occupancy tree representing a geometry of a point cloud;
receiving an edge coding mode of the TriSoup edge; and
dequantizing, based on the received edge coding mode, a TriSoup vertex position along the TriSoup edge.

2. The method of claim 1, further comprising:
determining the TriSoup vertex position based on the edge coding mode being a skip mode.

3. The method of any one of claims 1 to 2, further comprising:
constructing, based on the TriSoup vertex position, one or more TriSoup triangles;
voxelizing the one or more TriSoup triangles; and
reconstructing, based on the voxelizing, the point cloud.

4. The method of any one of claims 1 to 3, further comprising:
causing output of the reconstructed point cloud for display via a display device.

5. The method of any one of claims 1 to 4, wherein the dequantizing the TriSoup vertex position further comprises:
dequantizing the TriSoup vertex position with maximum precision based on the edge coding mode being a skip mode.

6. The method of any one of claims 1 to 5, wherein the receiving the edge coding mode further comprises:
obtaining a TriSoup edge shared by one or more sub-volumes associated with the one or more shared leaf nodes of the occupancy tree, wherein each sub-volume is associated with a shared leaf node of the occupancy tree;
receiving a status of each of the one or more shared leaf nodes; and
determining, based on the status of the one or more shared leaf nodes, the edge coding mode of the TriSoup edge.

7. The method of any one of claims 1 to 6, wherein the receiving the edge coding mode further comprises:
decoding, from a bitstream, edge coding mode information indicating the edge coding mode.

8. The method of any one of claims 1 to 7, wherein a quantization precision is determined based on the edge coding mode.

9. The method of any one of claims 1 to 8, wherein:
based on the edge coding mode being a skip mode, the TriSoup vertex position along the TriSoup edge is:
not quantized; or
quantized with maximum precision.

10. The method of any one of claims 1 to 9, further comprising:
based on the edge coding mode being a code mode, dequantizing a quantized position of the TriSoup vertex along the TriSoup edge with a precision lower than the maximum precision.

11. The method of any one of claims 1 to 10, wherein the receiving the edge coding mode further comprises:
receiving the edge coding mode based on a status of the one or more shared leaf nodes that share the TriSoup edge.

12. The method of claim 11, wherein, based on the status of the one or more shared leaf nodes, the edge coding mode information is entropy encoded in the bitstream or decoded from the bitstream.

13. A computing device comprising:
one or more processors; and
memory storing instructions that, when executed, cause the computing device to perform the method of any one of claims 1-12.

14. A system comprising:
a first computing device configured to perform the method of any one of claims 1-12; and
a second computing device configured to send the edge coding mode of the TriSoup edge.

15. A computer-readable medium storing instructions that, when executed, cause performance of the method of any one of claims 1-12.
